(19) Europäisches Patentamt
European Patent Office
Office européen des brevets

(11) EP 1 978 381 A1

(12) **EUROPEAN PATENT APPLICATION**

(43) Date of publication:
**08.10.2008 Bulletin 2008/41**

(51) Int Cl.:
***G02B 1/11*** *(2006.01)* ***G02B 5/02*** *(2006.01)*
***B32B 7/02*** *(2006.01)*

(21) Application number: **08161064.4**

(22) Date of filing: **20.11.2003**

(84) Designated Contracting States:
**AT BE BG CH CY CZ DE DK EE ES FI FR GB GR HU IE IT LI LU MC NL PT RO SE SI SK TR**

(30) Priority: **25.11.2002 JP 2002340913**
**25.11.2002 JP 2002341186**

(62) Document number(s) of the earlier application(s) in accordance with Art. 76 EPC:
**03774102.2 / 1 565 767**

(71) Applicant: **FUJIFILM Corporation**
**Minato-ku**
**Tokyo (JP)**

(72) Inventor: **Matsunaga, Naohiro**
**Minato-ku**
**Tokyo (JP)**

(74) Representative: **HOFFMANN EITLE**
**Patent- und Rechtsanwälte**
**Arabellastrasse 4**
**81925 München (DE)**

Remarks:
This application was filed on 24.07.2008 as a divisional application to the application mentioned under INID code 62.

(54) **Anti-reflection film, polarizing plate and liquid crystal display device**

(57) The invention provides an anti-reflection film secured with a sufficient defect-freeness, a polarizing plate comprising such an anti-reflection film and a display device comprising such an anti-reflection film or polarizing plate, and the anti-reflection film comprises at least one hard coat layer and an outermost low refractive index layer provided on a transparent support, wherein Ra (central line average roughness) of the surface of the anti-reflection film is not greater than 0.15 μm, and the hard coat layer comprises at least one specific particle, which particle satisfies the relationship

$$0\ \mu m \le d_{Max} - d_{AC} \le 7\ \mu m,$$

wherein $d_{Max}$ represents the maximum diameter of particles (unit: μm); and $d_{AC}$ represents the average diameter of the particles (unit: μm); and a polarizing plate and a polarizing plate and a display device comprising the film.

FIG. 1

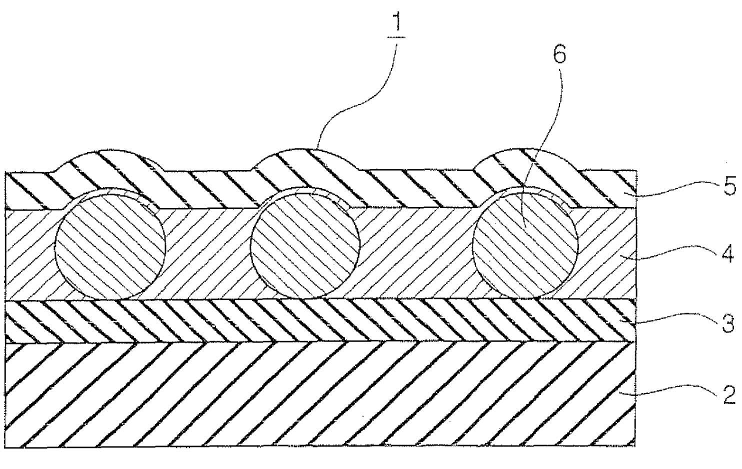




Printed by Jouve, 75001 PARIS (FR)

## Description

TECHNICAL FIELD

The present invention relates to an anti-reflection film, a polarizing plate and a display device comprising the anti-reflection film and polarizing plate.

BACKGROUND ART

An anti-reflection film is normally disposed on the outermost layer in a display device such as cathode ray tube (CRT), plasma display (PDP), electroluminescence display (ELD) and liquid crystal display device (LCD) to prevent the drop of contrast or reflection of image due to reflection of outdoor daylight on the basis of the principle of light diffusion and optical interference.

Such an anti-reflection film can be prepared by forming at least one hard coat layer (preferably having a high refractive index) on a support, and then forming a low refractive index layer having a proper thickness thereon.

An anti-reflection film has many requirements, including defect-freeness which is a growing demand. These defects are remarkable particularly with an anti-reflection film having a low antiglareness focusing on the black image tone and density and an internal scattering type anti-reflection film having a difference in refractive index between the binder and the particles contained in the hard coat layer. Therefore, it has been keenly desired to meet this demand. Examples of the factors causing the occurrence of defects include foreign matters such as dust, waste thread and skinning product (dried coating solution), and agglomerated particles and coarse particles contained in the particle incorporated in the hard coat layer.

These foreign matters can be eliminated by raising the cleanness at the producing step or filtering the coating solution through a filter. The agglomerated particles can be eliminated by improving the formulation of the coating solution. However, the method for controlling the coarse particles contained in the hard coat layer is not established yet. In particular, the occurrence of point defects due to coarse particles which cannot be eliminated even by improving the formulation of the coating solution causes a drastic drop of the product yield to disadvantage.

JP-A-2001-74936 discloses that anoptical filmconsisting of an upper layer and a lower layer wherein the surface of the lower layer is substantially free of raised portions greater than the thickness of the upper layer is effective for the prevention of the occurrence of defects. However, no optical films which are satisfactory for the prevention of the occurrence of point defects were obtained.

JP-A-2000-204173 discloses a film having foreign matters having a size of from 5 to 50 μm recognizable in cross nicol in a proportion of not greater than 200 pieces per 250 $mm^2$ and foreign matters having a size of greater than 50 μm recognizable in cross nicol in a proportion of substantially 0 piece per 250 $mm^2$ as an excellent film showing no abnormal emission (point defects). However, reference is made only to the support to be used in the preparation of anti-reflection film. Accordingly, this approach leaves much to be desired in the preparation of an excellent anti-reflection film free from point defects.

The hard coat layer as a lower layer is designed by properly adjusting the thickness of the hard coat layer and the particle diameter and number of particles to be incorporated therein such that desired properties such as antiglareness and film strength can be obtained. During this design procedure, when the large size particles contained in the hard coat layer contain coarse particles having a diameter deviating from the average particle diameter thereof, defects occur. When the coarse particles have remarkably great diameters, they form defects themselves. Even if not so, these coarse particles form protrusions with the surrounding binder and thus are recognized as defects. The same may be said of particles having an average diameter smaller than the thickness of the hard coat layer incorporated in the hard coat layer.

In order to enhance the actual feeling of antiglareness (to eliminate the appearance surface roughness), it is desired that the particle for providing antiglareness have a particle size distribution as sharp as possible. Further, in order to prevent the deterioration of black image tone and density due to surface scattering, an anti-reflection film having little or no antiglareness has been desiredparticularly for television purpose. Thus, the difference between the size of the particle for providing antiglareness and the thickness of the antiglareness hard coat layer has been reduced more than ever. Accordingly, the recent circumstances are that the sensitivity of detection of defects due to the occurrence of coarse particles has been raised. Further, in order to cope with the recent trend toward the increase of the size (to 21 inch or more) of liquid crystal television sets and the spread of wide liquid crystal television sets (aspect ratio: 9 : 16), it has been desired to reduce the percent occurrence of defects more than ever.

DISCLOSURE OF THE INVENTION

An object of the invention is to provide an anti-reflection film provided with a sufficient defect-freeness.

Another obj ect of the invention is to provide a polarizing plate comprising such an anti-reflection film.

A further object of the invention is to provide a display device such as liquid crystal display device comprising the aforementioned anti-reflection film and/or polarizing plate.

Extensive studies were made. As a result, it was found that the aforementioned problems can be solved by an anti-reflection film comprising at least one hard coat layer and an outermost low refractive index layer provided on a transparent support, wherein each particle in the hard coat layer has a specific property. The invention has thus been worked out.

In accordance with the invention, an anti-reflection film, a polarizing plate and a display device having the following constitution are provided to accomplish the aforementioned objects.

1. An anti-reflection film (a first embodiment) comprising a transparent support, at least one hard coat layer and an outermost low refractive index layer,
wherein (a) the surface of the anti-reflection film has a central line average roughness: Ra of not greater than 0.15 μm, (b) the hard coat layer comprises at least one kind of particle and (c) the at least one kind of the particle includes a particle having an average particle diameter of not smaller than 80% of the thickness of the hard coat layer and cut point value (CP value) of coarse particles in the hard coat layer is less than 4 times the thickness of the hard coat layer.

2. The anti-reflection film as defined in the item 1,
wherein the hard coat layer further comprises at least one particle providing an internal scattering property the at least one particle providing an internal scattering property has an average particle diameter of less than 80% of the thickness of the hard coat layer and the cut point value (CP value) of coarse particles in the at least one particle providing an internal scattering property is less than 4 times the thickness of the hard coat layer.

3. The anti-reflection film as defined in the item 1 or 2, wherein the at least one hard coat layer includes a. light-diffusing layer, and the light-diffusing layer has a scattered light intensity at 30° of 0.01 to 0.2% based on the light intensity at an exit angle of 0° in a scattered light profile measured by a goniophotometer.

4. The anti-reflection film as defined in any one of the items 1 to 3, wherein the surface of the anti-reflection film has a central line average roughness Ra of not greater than 0.10 μm.

5. The anti-reflection film as defined in any one of the items 1 to 4, which has a value of transmitted image sharpness of from not smaller than 40% to less than 97% as measured at a comb width of 0.5 mm.

6. A polarizing plate comprising a polarizer and two protective films of the polarizer, wherein one of the two protective films of the polarizer is the anti-reflection film described in any one of the items 1 to 5.

7. The polarizing plate as defined in the item 6, wherein the protective film other than the anti-reflection film of the two protective films of a polarizer is an optical compensation film having an optical compensation layer comprising an optically anisotropic layer, and
the optically anisotropic layer is a layer having a negative birefringence and comprising a compound having a discotic structure unit, the discplane of the discotic structure unit is inclined with respect to the surface protective film plane and the angle between the disc plane of the discotic structure unit and the surface protective film plane is changed in the direction of depth of the optically anisotropic layer.

8. A liquid crystal display device comprising the anti-reflection film defined in any one of the items 1 to 5 or the polarizing plate defined in the item 6 or 7, as an outermost layer of the display device.

9. The liquid crystal display device as defined in the item 8, which is one of a liquid crystal large-sized television having a size of not smaller than 21 inch and a liquid crystal wide television having an aspect ratio of 9 : 16 or greater.

10. A liquid crystal display device of a TN-, STN-, VA-, IPS- or OCB-mode transmission, reflection or semi-transmission type, comprising at least one of anti-reflection film defined in any one of the items 1 to 5 or a polarizing plate defined in the item 6 or 7.

11. An anti-reflection film (a second embodiment) comprising a transparent support, at least one hard coat layer and an outermost low refractive index layer,
wherein (a) the surface of the anti-reflection film has a central line average roughness: Ra of not greater than 0.15 μm, (b) the hard coat layer comprises at least one kind of particle, and (c) the at least one kind of particle includes

a particle having an average particle diameter of not smaller than 80% of the thickness of the hard coat layer and the particle in the hard coat layer satisfies a relationship represented by the following formula (1) :

$$0\ \mu m \leq d_{Max} - d_{AC} \leq 7\ \mu m \qquad (1)$$

wherein $d_{Max}$ represents the maximum diameter of particles (unit: μm) ; and $d_{AC}$ represents the average diameter of the particles (unit: μm).

12. The anti-reflection film as defined in the item 11, wherein the hard coat layer further comprises at least one particle providing an internal scattering property, and the at least one particle providing an internal scattering property has an average particle diameter of less than 80% of the thickness of the hard coat layer and satisfies the relationship represented by the formula as defined in the item 11.

13. The anti-reflection film as defined in the item 11 or 12, wherein the at least one hard coat layer includes a light-diffusing layer, and the light-diffusing layer has a scattered light intensity at 30° of 0.01 to 0.2% based on the light intensity at an exit angle of 0° in a scattered light profile measured by a goniophotometer.

14. The anti-reflection film as defined in any one of the items 11 to 13, wherein the surface of the anti-reflection film has a central line average roughness Ra of not greater than 0.10 μm.

15. The anti-reflection film as defined in any one of the items 11 to 14, which has a value of transmitted image sharpness of from not smaller than 40% to less than 97% as measured at a comb width of 0.5 mm.

16. A polarizing plate comprising a polarizer and two protective films of the polarizer, wherein one of the two protective films of the polarizer is the anti-reflection film described in any one of the items 11 to 15.

17. The polarizing plate as defined in the item 16, wherein the protective film other than the anti-reflection film of the two protective films of a polarizer is an optical compensation film having an optical compensation layer comprising an optically anisotropic layer, and
the optically anisotropic layer is a layer having a negative birefringence and comprising a compound having a discotic structure unit, the discplane of the discotic structure unit is inclined with respect to the surface protective film plane and the angle between the disc plane of the discotic structure unit and the surface protective film plane is changed in the direction of depth of the optically anisotropic layer.

18. A liquid crystal display device comprising the anti-reflection film defined in any one of the items 11 to 15, or the polarizing plate defined in the item 16 or 17, as an outermost layer of the display device.

19. The liquid crystal display device as defined in the item 18, which is one of a liquid crystal large-sized television having a size of not smaller than 21 inch and a liquid crystal wide television having an aspect ratio of 9 : 16 or greater.

20. A liquid crystal display device of a TN-, STN-, VA-, IPS- or OCB-mode transmission, reflection or semi-transmission type, comprising at least one of anti-reflection film defined in any one of the items 11 to 15 or a polarizing plate defined in the item 16 or 17.

BRIEF DESCRIPTION OF THE DRAWINGS

Fig. 1 is a schematic sectional view typically illustrating the layer configuration of an anti-reflection film.

Description of Reference Numerals and Signs

1 Anti-reflection film
2 Transparent support

3 Hard coat layer
4 Hard coat layer
5 Low refractive index layer
6 Large size particle

BEST MODES OF CARRYING OUT THE INVENTION

The basic constitution of an anti-reflection film which can be used as an embodiment of implementation of the invention will be described in connection with Fig. 1.

Fig. illustrates an example of the anti-reflection film of the invention in the form of typical schematic sectional view. In this arrangement, the anti-reflection film 1 has a layer structure comprising a transparent support 2, a hard coat layer 3, a hard coat layer 4 and a low refractive index layer 5 in this order. The low refractive index layer 5 is disposed outermost. The hard coat layer 4 has an antiglareness-providing particle 6 (some of the particles may be embedded in the layer) dispersed therein. The refractive index of the matrix material of the hard coat layer 4 in the portion other than the particle 6 is preferably from 1.50 to 2.00. The refractive index of the low refractive index layer 5 is preferably from 1.38 to 1.49. In the invention, the hard coat layer may be a combination of such an antiglareness hard coat layer and a non-antiglareness hard coat layer or may comprise either of the two hard coat layers . Thehardcoat layer may consist of a plurality of layers, e.g., 2 to 4 layers. The hard coat layer 3 as shown in Fig. 1 is not essential but is preferably provided to provide a film strength.

The hard coat layer of the invention will be further described hereinafter.

The hard coat layer is formed by a binder for providing hard coat properties, large size particles, particles for providing internal scattering properties and an inorganic filler for providing a high refractive index and a high strength and preventing crosslinking shrinkage. The particles and the inorganic filler are distinguished from each other.

The binder is preferably a polymer having a saturated hydrocarbon chain or polyether chain, more preferably a saturated hydrocarbon chain, as a main chain.

Further, the binder preferably has a crosslinked structure.

The binder polymer having a saturated hydrocarbon chain as a main chain is preferably a polymer of an ethylenically unsaturated monomer. The binder polymer having a saturated hydrocarbon chain as a main chain and a crosslinked structure is preferably a (co)polymer of a monomer having two or more ethylenically unsaturated groups.

In order to provide a high refractive index, the monomer structure preferably comprises an aromatic ring or at least one atom selected from the group consisting of halogen atom other than fluorine, sulfur atom, phosphorus atom and nitrogen atom incorporated therein.

Examples of the monomer having two or more ethylenically unsaturated groups include ester of polyvalent alcohol with (meth)acrylic acid (e.g., ethylene glycol di(meth)acrylate, 1,4-cyclohexane diacrylate, pentaerythritol tetra (meth) acrylate, pentaerythritol tri (meth) acrylate, trimethylol propane tri(meth)acrylate, ethylene oxide-added trimethylol propane tri(meth)acrylate, trimethylolethane tri (meth) acrylate, dipentaerythritol tetra (meth) acrylate, dipentaerythritol penta (meth) acrylate, dipentaerythritol hexa (meth) acrylate, pentaerythritol hexa (meth) acrylate, 1,2,3-cyclohexane tetramethacrylate, polyurethane polyacrylate, polyester polyacrylate), vinylbenzene and derivatives thereof (e.g., 1,4-divinylbenzene, 4-vinylbenzoic acid-2-acryloylethyl ester, 1,4-divinylcyclohexanone), vinylsulfone (e.g., divinylsulfone), acrylamide (e.g., methylene bisacrylamide), and methacrylamide. These monomers may be used in combination of two or more thereof.

Specific examples of the high refractive index monomer include bis(4-methacryloylthiophenyl) sulfide, vinyl naphthalene, vinylphenyl sulfide, and 4-methacryloylphenyl-4'-methoxyphenylthioether. These monomers, too, may be used in combination of two or more thereof.

The polymerization of these monomers having an ethylenically unsaturated group may be effected by irradiation with ionizing radiation and/or heating in the presence of a photoradical polymerization initiator or thermal radical polymerization initiator.

Accordingly, the hard coat layermaybe formed by preparing a coating solution comprising a monomer having an ethylenically unsaturated group, a photoradical polymerization initiator or thermal radical polymerization initiator, a large size particle (particle providing an antiglareness), a particle having internal scattering properties and an inorganic filler, spreading the coating solution over a transparent support, drying the coated support, subjecting the coat layer to polymerization reaction by irradiation with ionizing radiation or heating so that it is cured, and optically subjecting the coat layer to post-heating drying for the purpose of reducing the content of remaining solvent before or after curing.

Examples of the photoradical polymerization initiator include acetophenones, benzoins, benzophenones, phosphine oxides, ketals, anthraquinones, thioxanthones, azo compounds, peroxides, 2,3-dialkyldione compounds, disulfides, fluoroamine compounds, and aromatic sulfoniums.

Examples of the acetophenones include 2,2-diethoxyacetophenone, p-dimethylacetophenone, 1-hydroxydiemtylphenylketone, 1-hydroxycyclohexylphenyl ketone, 2-methyl-4-methylthio-2- morpholinopropiophenone, and 2-benzyl-2-dimethylamino-1-(4-morpholinophenyl)-butanone.

Examples of the benzoins include benzoinbenzenesulfonic acid ester, benzointoluenesulfonic acid ester, benzoinmethyl ether, benzoinethyl ether, and benzoinisopropyl ether.

Examples of the benzophenones include benzophenone, 2,4-dichlorobenzophenone, 4,4-dichlorobenzophenone, and p-chlorobenzophenone.

Examples of the phosphine oxides include 2,4,6-trimethylbenzoyl diphenyl phosphine oxide.

Various examples are described in Kazuhiro Takausu, "Saishin UV Koka Gijutsu (Modern UV Curing Technique)", Technical Information Institute Co., Ltd., page 159, 1991. These examples are useful in the invention.

Preferred examples of commercially available photo-cleavable photoradical polymerization initiators include IRGACURE (651, 184, 907), produced by Ciba-Geigy Japan Limited.

The photopolymerization initiator is used in an amount of from 0.1 to 15 parts by weight, more preferably from 1 to 10 parts by weight based on 100 parts by weight of the polyfunctional monomer.

In addition to the photopolymerization initiator, a photosensitizer may be used. Specific examples of the photosensitizer include n-butylamine, triethylamine, tri-n-butylphosphine, Michler's ketone, and thioxanthone.

As the thermal radical initiator there may be used an organic or inorganic peroxide, organic azo or diazo compound or the like.

Specific examples of the organic peroxide include benzoyl peroxide, halogen benzoyl peroxide, lauroyl peroxide, acetyl peroxide, dibutyl peroxide, cumene hydroperoxide, and butyl hydroperoxide, Specific examples of the inorganic peroxide include hydrogen peroxide, ammonium persulfate, and potassium persulfate. Specific examples of the azo compound include 2-azo-bis-isobutylnitrile, 2-azo-bis-propionitrile, and 2-azo-bis-cyclohexanedinitrile. Specific examples of the diazo compound include diazoaminobenzene, and p-nitrobenzene diazonium.

The polymer having a polyether as a main chain is preferably a ring-opening polymerization product of polyfunctional epoxy compound. The ring-opening polymerization of the polyfunctional epoxy compound may be carried out by irradiation with ionizing radiation or heating in the presence of a photo-acid generator or heat-acid generator.

Accordingly, the anti-reflection film may be formed by preparing a coating solution comprising a polyfunctional epoxy compound, a photo-acid generator or heat-acid generator, a particle matting material and an inorganic filler, spreading the coating solution over a transparent support, and then subjecting the coated material to polymerization reaction by irradiation with ionizing radiation or heating so that it is cured.

A monomer having a crosslinkable functional group may be used instead of or in addition to the monomer having two or more ethylenically unsaturated groups to incorporate the crosslinkable functional group in the polymer so that the reaction of the crosslinkable functional group causes a crosslinked structure to be incorporated in the binder polymer.

Examples of the crosslinkable functional group include isocyanate groups, epoxy groups, aziridine groups, oxazoline groups, aldehyde groups, carbonyl groups, hydrazine groups, carboxyl groups, methylol groups, and active methylene groups. Vinylsulfonic acids, acid anhydrides, cyanoacrylate derivatives, melamine, etherifiedmethylols, esters, urethanes and metal alkoxides such as tetramethoxysilane, too, may be used as monomers for introducing a crosslinked structure. A functional group such as blocked cyanate group which exhibits crosslinking properties as a result of reaction may be used as well. In other words, the crosslinkable functional group to be used in the invention may not be reactive shortly after added so far as it is reactive as a result of reaction.

When the binder polymer having such a crosslinkable functional group is spread and heated, the crosslinked structure can be formed.

The hard coat layer comprises large size particles of inorganic compound or resin incorporated therein having an average diameter of not smaller than 80% of the thickness thereof or preferably from to 10 μm, more preferably from 2 to 7 μm.

Specific examples of the aforementioned particle include particulate inorganic compounds such as particulate silica and $TiO_2$, particulate resins such as crosslinked acryl, particulate crosslinked styrene, particulate melamine resin, particulate benzoguanamine resin and particulate nylon resin, and particulate inorganic-organic hybrids. Preferred among these particulate materials are particulate crosslinked styrene, particulate crosslinked acryl, and particulate silica.

Particularly preferred among these particle materials are particulate crosslinked acryl, and particulate silica from the standpoint of light-resistance.

The particle may be spherical, irregular, acicular, rod-shaped or tabular, normally spherical.

Further, two or more particles having different particle diameters may be used in combination. The hard coat layer may comprise a particle incorporated therein having a particle diameter greater than the thickness of the hard coat layer to have antiglareness and may comprise a particle incorporated therein having a particle diameter smaller than the thickness of the hard coat layer to have other optical properties. In this case, the smaller particle has a particle diameter smaller than the thickness of the hard coat layer, preferably an average particle diameter of from 0.5 to 7 μm, more preferably from 1 to 5 μm.

When an anti-reflection film is stuck to a high precision display, an optical property called anti-glittering is

required. Referring to this problem, an unevenness (contributing to antiglareness) present on the surface of the anti-reflection film acts as a lens on a high precision display having small pixels to cause light having random intensity to be emitted from the opening of a color filter, giving scattering of brightness (glittering). This problem can be drastically eliminated by using a particle having a particle diameter smaller than the thickness of the hard coat layer and a refractive index different from that of the matrix of the hard coat layer (composite matrix of resin binder with inorganic filler in the case where the hard coat layer is formed by a resin binder and an inorganic filler) to provide the hard coat layer with internal scattering properties. The difference in refractive index between the particle and the matrix of the hard coat layer is preferably from 0.05 to 0.25, more preferably from 0.08 to 0.20. In this case, the large size particle may have a refractive index different from that of the binder matrix similarly to the small size particle.

Similarly, it was confirmed that the distribution of intensity of scattered light from the hard coat layer provided with optimum internal scattering properties measured by a goniophotometer is related to the effect of improving the viewing angle of the liquid crystal display device. In other words, the more the light emitted by the back light is diffused through a light diffusing film disposed on the surface of the polarizing plate on the viewing side, the better are the viewing angle properties. However, when the light is diffused too much, it causes greater back scattering that reduces the front brightness or gives blurred letters. Accordingly, it is necessary that the distribution of intensity of scattered light be controlled to a certain range. To this end, extensive studies have been made. As a result, it was found that the accomplishment of desired viewability can be made by predetermining the intensity of scattered light at an emission angle of 30°, which is related to the effect of improving the viewing angle properties, preferably to a range of from 0.01 to 0.2%, more preferably to a range of from 0.02 to 0.15%, particularly to a range of from 0.03% to 0.1% with respect to the intensity of emission at an angle of 0° in the scattered light profile. In this case, too, the difference in refractive index between the binder matrix and the small size particle (particle providing internal scattering properties) having an average particle diameter of less than 80% of the thickness of the hardcoat layer is preferably from 0.05 to 0.25, more preferably from 0.08 to 0.20. The large size particle may have a refractive index different from that of the binder matrix so far as the entire film can be provided with a desired scattering intensity similarly to the small size particle. The scattered light profile can be measured on the anti-reflection film thus prepared using a Type GP-5 automatic variable-angle photometer (produced by Murakami Color Research Laboratory). Large-sized television sets having a size of not smaller than 21 inch and wide television sets having an aspect ratio of 9 : 16 or more must be viewed not only from the front but also from various viewing angles and thus are particularly required to have good viewing angle properties.

The amount of the large size particle in the hard coat layer is preferably from 10 to 1,000 $mg/m^2$, more preferably from 50 to 500 $mg/m^2$. The amount of the particle for providing internal scattering properties is preferably from 100 to 1, 000 $mg/m^2$ more preferably from 200 to 700 $mg/m^2$, In the case where two or more of each of the large size particle and the particle for providing internal scattering properties are used, the total amount of these particles preferably falls within the respective desired range.

The thickness of the hard coat layer is preferably from 0.5 to 6 $\mu$m, more preferably from 1 to 6 $\mu$m. When the thickness of the hard coat layer is too small, the resulting hard coat layer is deteriorated in film strength such as pencil strength. On the contrary, when the thickness of the hard coat layer is too great, the resulting hard coat layer has problems of brittleness or curling.

The hard coat layer preferably comprises an inorganic filler made of oxide of at least one metal selected from the group consisting of titanium, zirconium, aluminum, indium, zinc, tin and antimony having an average particle diameter of not greater than 0.2 $\mu$m, preferably not greater than 0.1 $\mu$m, more preferably not greater than 0.06 $\mu$m, and sufficiently smaller than the thickness of the hard coat layer incorporated therein in addition to the aforementioned particles for the purpose of raising the refractive index and strength thereof and preventing crosslinking shrinkage.

Specific examples of the inorganic filler to be incorporated in the hard coat layer include $TiO_2$, $ZrO_2$, $Al_2O_3$, $In_2O_3$, ZnO, $SnO_2$, $Sb_2O_3$, ITO, and $SiO_2$. Particularly preferred among these inorganic fillers are $TiO_2$ and $ZrO_2$ from the standpoint of enhancement of refractive index. The inorganic filler is preferably subjected to silane coupling treatment or titanium coupling treatment. A surface treatment agent having a functional group which can react with the seed of binder on the surface of filler is preferably used.

The amount of the inorganic filler to be incorporated is preferably from 10 to 90%, more preferably from 20 to 80%, particularly from 30 to 75% based on the total weight of the hard coat layer.

Such a filler has a particle diameter sufficiently smaller than the wavelength of light and thus causes no scattering. The composite having such an inorganic filler dispersed in a resin binder behaves as an optically uniform substance. When sufficient dispersibility is assured, no inorganic filler that causes point defects occurs.

The refractive index of the composite of resin binder with inorganic filler in the hard coat layer of the invention is preferably from 1.50 to 2.00, more preferably from 1.50 to 1.80. In order to predetermine the refractive index to the aforementioned range, the kind and proportion of the binder and the inorganic filler may be properly selected. How these factors should be selected can easily be previously and experimentally known.

The point defects of the invention are defined as follows.

(Definition of the number of point defects)

A 1 m x 1 m anti-reflection film terminal sampled at random is examined for point defects under a transmission light source. Bright points having a size of not smaller than 50 μm detectable by ordinary users' eyes are then marked as point defects. This examination is conducted on 100 sheets of 1 m x 1 m terminals sampled at random. The total number of point defects thus counted is then divided by 100 to determine the average number of point defects per $m^2$. Taking into account the product yield, the average number of point defects is preferably not greater than 1 point/$m^2$, more preferably not greater than 0.2 points/$m^2$, still more preferably not greater than 0.04 points/$m^2$, particularly preferably 0 point/$m^2$ (not more than the detection sensitivity).

It is particularly preferred that one or more large size particles contained in the hard coat layer be monodisperse in the distribution of particle diameter because the hard coat layer can be uniformly provided with optical properties or physical properties (film strength, etc.) or a defect-free anti-reflection film, which is an aim of the invention, can be obtained. Further, it is most desirable that the one or more large size particles contained in the hard coat layer and the particles which are contained in the hard coat layer but provide no antiglareness each be monodisperse in the distribution of particle diameter.

In the first embodiment of the invention, in order to inhibit the occurrence of point defects, it is essential in the anti-reflection film comprising at least one hard coat layer and an outermost low refractive index layer provided on a transparent support that one or more particles (both one or more large size particles and one or more particles for providing internal scattering properties) and various coarse particles contained in the hard coat layer have a cut point value (CP value) of less than four times the thickness (D) of the hard coat layer. In other words, it is essential that CP value be less than 4D, preferably 3D, more preferably 2D. As the ratio of CP value to the thickness of the hard coat layer decreases, it is more advantageous in that no point defects occur with low antiglareness and high image sharpness films which must satisfy high level requirements.

The most desirable particle size distribution is that the particle diameter is single. However, when the distribution of particle size is extremely sharp, it drastically adds to the classification cost as in the production of liquid crystal spacer particles. Therefore, such a particle size distribution is not desirable from this standpoint of view. Taking into account the production cost, the lower limit of the particle diameter of the particles is about 1.5D.

The cut point value of coarse particles among the particles is defined by the diameter of the greatest particle among arbitrary million particles. The method for the measurement of cut point value will be described in the examples later with the method for the measurement of the thickness of the hard coat layer.

The particle having such a sharp di stribution of particle diameter can be obtained by a method involving classification after ordinary synthesis of particle besides a sol-gel method involving the predetermination of synthesis conditions such that the growth of particles is uniform. By increasing the number of classification steps or optimizing the conditions, a particle having a better and sharper distribution of particle diameter can be obtained.

Examples of classification methods include air classification, mesh classification, classification utilizing difference of sedimentation rate, and classification utilizing centrifugal separation. However, the classification method employable herein is not limited so far as a desired particle size distribution can be obtained. The most efficient classification method is air classification.

In the second embodiment of the invention, in order to prepare a fully defect-free anti-reflection film, it is essential that one or more large-size particles contained in the hard coat layer each satisfy the following relationship (1). It is further preferred for the preparation of a fully defect-free anti-reflection film that the internal-scattering particles each satisfy the following relationship (1) (in this case, $d_{MAX}$ and $d_{AV}$ are each obtained by internal-scattering particles).

$$0\ \mu m \leq d_{Max} - d_{AC} \leq 7\ \mu m \quad (1)$$

wherein $d_{Max}$ represents the maximum diameter of particles (unit: μm) ; and $d_{Ac}$ represents the average diameter of the particles (unit: μm).

Preferably, the relationship $0\ \mu m \leq d_{Max} - d_{AC} \leq 5\ \mu m$ is satisfied. More preferably, the relationship $0\ \mu m \leq d_{Max} - d_{AC} \leq 3\ \mu m$ is satisfied. Even more preferably, the relationship $0\ \mu m \leq d_{Max} - d_{AC} \leq 1\ \mu m$ is satisfied.

Referring to particle size distribution, it is most desirable that the particle diameter is single, that is, $d_{Max} - d_{AC}$ is nearly equal to 0 μm. However, the step of extremely narrowing the distribution of particle sizes adds drastically to the classification cost as in liquid crystal spacer particle to disadvantage. Taking into account the production cost, the substantial lower limit of the particle diameter is about 0.5 μm. For the method of measuring the average particle diameter and maximum particle diameter, reference can be made to the examples described later.

The particulate material having such a sharp particle diameter distribution can be obtained by amethodwhich comprises classifying particles which have been synthesized by an ordinary method besides a method which comprises

using a sol-gel method or the like to predetermine synthesis conditions under which the growth of particles can be effected uniformly. By increasing the number of classification steps or optimizing the conditions, a better particulate material having a sharp particle diameter distribution can be obtained.

Examples of the classification method employable herein include air classification, mesh classification, classification utilizing difference of sedimentation rate, and classification utilizing centrifugal separation. However, the classification method employable herein is not specifically limited so far as the desired particle size distribution can be obtained. The most efficient classification method is air classification.

The value of transmission image sharpness will be described hereinafter. For the determination of this value, a Type ICM-2D image clarity meter (produced by Suga Test Instruments Co., Ltd.) was used. The area on the sample to be measured was 50 mm x 50 mm, An optical comb having a width of 0.5 mm was used. Clarity is a measure of how sharp and distortion-free an object is imaged on the surface of the coat. In particular, the magnitude of the value of clarity measured using an optical comb having a width of 0.5 mm (referred to as "transmission image sharpness") is a good index corresponding to the sharpness of displayed image.

This measuring instrument and principle are widely known as method for the measurement of clarity of transmission object in JIS K7105 (method for testing the optical properties of plastic). It was decided that this method will be reported in an ISO technical paper at ISO/TC79/SC1. This method involves the measurement of reflected light from the sample using a moving optical comb. The clarity value is determined by calculation. When the sample causes blur, the slit imaged on the optical comb has an increased thickness due to the effect of blur. Thus, the both ends of the slit image extend to the opaque portion at the position of transmission portion, causing the drop of amount of light from 100%. On the other hand, light leaks from the opaque portion at the both ends of the slit image, causing the rise of amount of light from 0%. Thus, the value of transmission image sharpness measured by a clarity meter is defined by the maximum transmission M at the transparent portion of the optical comb and the minimum transmission m at the opaque portion of the optical comb according to the following equation.

$$\text{Transmission image sharpness C (\%)} = [(M - m)/(M + m)] \times 100$$

The greater C value is, the higher is the transmission image sharpness. The smaller C value is, the greater is the degree of "blur" or "distortion" of transmission image. (Suga and Mitamura, "Toso Gijutsu (Coating Technology) : Clarity meter", July 1985.).

The antiglareness anti-reflection film of the invention preferably has a transmission image sharpness of from not smaller than 40% to less than 97%, more preferably from not smaller than 60% to less than 95% as determined using an optical comb having a comb width of 0.5 mm.

The central line average roughness (Ra) will be further described hereinafter. The central line average roughness is a numerical value defined according to JIS B0601-1982. The antiglareness anti-reflection film of the invention preferably has a central line average roughness Ra of not greater than 0.15 μm, more preferably not greater than 0.10 μm. When the central line average roughness Ra is not smaller than 0.03 μm, a desired antiglareness can be realized, providing an antiglareness anti-reflection film. When the central line average roughness Ra exceeds 0.15 μm, a sufficient antiglareness can be attained, but the resulting surface scattering causes deterioration of image black tone and density, image blurring or image whitening under outdoor daylight to disadvantage.

In the invention, by properly adjusting the particle diameter (dav) and particle frequency of the aforementioned large size particle and the thickness of the hard coat layer, the central line average roughness Ra can be predetermined to the aforementioned range, making it possible to produce an antiglareness anti-reflection film which can give a black image tone and density, shows no whitening under outdoor daylight and becomes substantially antiglare when Ra is not smaller than 0.03 μm without causing much point defects.

The spread of the hard coat layer coating solution of the invention is preferably from not smaller than 3 $cc/m^3$ to not greater than 20 $cc/m^2$, more preferably from not smaller than 5 $cc/m^3$ to not greater than 15 $cc/m^2$. When the spread of the hard coat layer coating solution is not greater than 3 $cc/m^2$, the resulting coating solution has too high a viscosity that can adversely affect its spreadability in the case where a hard coat layer is formed to a desired thickness. On the contrary, when the spread of the hard coat layer coating solution exceeds 20 $cc/m^2$, the resulting increase of drying burden or prolongation of duration required until drying can cause deterioration of the surface conditions of the coat layer.

The anti-reflection film of the invention may comprise a non-antiglareness, i.e., so-called smooth hard coat layer provided interposed between the transparent support and the hard coat layer for the purpose of enhancing the film strength. The material of the smooth hard coat layer is the same as that listed with reference to the hard coat layer

except that no large size particles are used. The smooth hard coat layer is formed by a resin binder, an inorganic filler, a reaction initiator, and optionally an internal scattering property-providing particle.

As the inorganic filler to be incorporated in the smooth hard coat layer of the invention there is preferably used silica or alumina, particularly silica from the standpoint of strength and general-purpose properties. The inorganic filler is preferably subjected to silane coupling treatment on the surface thereof. A surface treatment agent having a functional group which can react with the seed of binder on the surface of filler is preferably used.

The amount of the inorganic filler to be incorporated is preferably from 10 to 90%, more preferably from 20 to 80%, particularly from 30 to 75% based on the total weight of the hard coat layer. The thickness of the smooth hard coat layer is preferably from 1 to 10 μm, more preferably from 2 to 5 μm.

The low refractive index layer of the invention will be further described hereinafter.

The refractive index of the antiglareness anti-reflection film of the invention is from 1.38 to 1.49, preferably from 1.38 to 1.44. Further, the low refractive index layer preferably satisfies the following relationship from the standpoint of reduction of reflectance.

$$\text{Relationship (2): } m/4 \times 0.7 < n_1 d_1 < m/4 \times 1.3$$

wherein m represents a positive odd number; $n_1$ represents the refractive index of the low refractive index layer; $d_1$ represents the thickness (nm) of the low refractive index layer; and λ represents a wavelength of from 500 to 550 nm.

The satisfaction of the aforementioned relationship (2) means that m (positive odd number which is normally 1) satisfying the relationship (2) in the aforementioned wavelength range occurs.

The material constituting the low refractive index layer of the invention will be described hereinafter.

The low refractive index layer comprises a fluorine-containing polymer or fluorine-containing sol-gel material incorporated therein as a low refractive index binder. As the fluorine-containing polymer or fluorine-containing sol-gel material there is preferably used a material having a dynamic friction coefficient of from 0.03 to 0.15 and a contact angle of from 90 to 120° with respect to water which undergoes crosslinking under heating or irradiation with ionizing radiation. The low refractive index layer of the invention may comprise an inorganic filler incorporated therein for enhancing the film strength.

The low refractive index layer formed by a fluorine-containing polymer will be described hereinafter.

As the fluorine-containing polymer to be used for the low refractive index layer there may be used a fluorine-containing copolymer comprising a fluorine-containing monomer unit and a constituent unit for providing crosslinking reactivity as constituents besides the hydrolyzation or dehydration condensation product of a perfluoroalkyl-containing silane compound (e.g., (heptadecafluoro-1,1,2,2-tetrahydrodecyl)triethoxysilane.

Specific examples of the fluorine-containingmonomer unit include fluoroolefins (e.g., fluoroethylene, vinylidene fluoride, tetrafluoroethylene, hexafluoroethylene, hexafluoropropylene, perfluoro-2,2-dimethyl-1,3-dioxol), partially or fully fluorinated alkylester derivatives of (meth) acrylic acid (e.g., Biscoat 6FM (produced by OSAKA ORGANIC CHEMICAL INDUSTRY LTD.), M-2020 (producedby DAIKIN INDUSTRIES, Ltd.)), and fully or partially fluorinated vinyl ethers. Preferred among these fluorine-containing monomer units are perfluoroolefins. Particularly preferred among these fluorine-containing monomer units is hexafluoropropylene from the standpoint of refractive index, solubility, transparency, availability, etc.

Examples of the constituent unit for providing crosslinking reactivity include constituent units obtained by the polymerization of a monomer having a self-crosslinking functional group in molecule such as glycidyl (meth) acrylate and glycidyl vinyl ether, constituent units obtained by the polymerization of a monomer having a carboxyl group, hydroxyl group, amino group, sulfo group or the like (e.g., (meth) acrylic acid, methylol (meth) acrylate, hydroxyalkyl (meth) acrylate, allyl acrylate, hydroxyethyl vinyl ether, hydroxybutyl vinyl ether, maleic acid, crotonic acid), and constituent units obtained by subjecting these constituent units to polymerization reaction so that a crosslinking reactive group such as (meth)acryloyl group is incorporated therein (e.g., by acting acrylic acid chloride on hydroxyl group).

Besides the aforementioned fluorine-containing monomer units and constituent units for providing crosslinking reactivity, monomers free of fluorine atom may be properly copolymerized from the standpoint of solubility in solvent, film transparency, etc. The monomer units to be additionally used are not specifically limited. Examples of these monomer units include olefins (e.g., ethylene, propylene, isoprene, vinyl chloride, vinylidene chloride), acrylic acid esters (e.g., methyl acrylate, ethyl acrylate, 2-ethylhexyl acrylate), methacrylic acid esters (e.g., methyl methacrylate, ethyl methacrylate, butyl methacrylate, ethylene glycol dimethacrylate), styrene derivatives (e.g., styrene, divinylbenzene, vinyl toluene, α-methylstyrene), vinyl ethers (e.g., methyl vinyl ether, ethyl vinyl ether, cyclohexyl vinyl ether), vinyl esters (e.g., vinyl acetate, vinyl propionate, vinyl cinnamate), acrylamides (e.g., N-tert butyl acrylamide, N-cyclohexyl acrylamide), methacrylamdies, and acrylonitrile derivatives.

A hardener may be used in combination with the aforementioned polymer as disclosed in JP-A-10-25388 and

JP-A-10-147739.

The fluorine-containing polymer which is particularly useful in the invention is a random copolymer of perfluoroolefin with vinyl ether or vinyl ester. It is particularly preferred that the fluorine-containing polymer have a group capable of undergoing crosslinking reaction independently (e.g., radical reactive group such as (meth)acryloyl group, ring-opening polymerizable group such as epoxy group and oxetanyl group) . These crosslinking reactive group-containing polymer units preferably account from 5 to 70 mol-%, particularly from 30 to 60 mol-% of all the polymer units of the fluorine-containing polymer.

The fluorine-containing polymer of the invention preferably comprises a polysiloxane structure incorporated therein for the purpose of providing stainproofness. The method for incorporating a polysiloxane structure in the fluorine-containing polymer is not limited. However, as disclosed in JP-A-11-189621, JP-A-11-228631 and JP-A-2000-313709, there is preferably used a method which comprises incorporating a polysiloxane block copolymerizable component in the presence of a silicone macroazo initiator. As disclosed in JP-A-2-251555 and JP-A-2-308806, there is preferably used a method which comprises incorporating a polysiloxane graft copolymerizable component in the presence of a silicone macromer. The amount of these polysiloxane components is preferably from 0. 5 to 10% by weight, particularly from 1 to 5% by weight based on the weight of the fluorine-containing polymer.

In order to provide stainproofness, a reactive group-containing polysiloxane (e.g., KF-100T, X-22-169AS, KF-102, X-22-3701IE, X-22-164B, X-22-5002, X-22-173B, X-22-174D, X-22-167B, X-22-161AS (trade name, produced by Shin-etsu Chemical Co., Ltd.), AK-5, AK-30, AK-32 (trade name, produced by TOAGOSEI CO., LTD.), SILAPLANE FM0275, SILAPLANE FM0721 (produced by CHISSO CORPORATION)) is preferably added besides the aforementioned polysiloxane structures. In this case, these polysiloxanes are preferably incorporated in an amount of from 0.5 to 10% by weight, particularly from 1 to 5% by weight basedon the total solid content of the low refractive index layer.

The low refractive index layer of the invention preferably comprises at least one inorganic filler incorporated therein for the purpose of enhancing the scratch resistance thereof. Such an inorganic filler will be further described hereinafter.

The inorganic filler preferably has a low refractive index because it is incorporated in the low refractive index layer.

Examples of the inorganic filler employable herein include magnesium fluoride, and silica. Particularly preferred among these inorganic fillers is silica from the standpoint of refractive index, dispersion stability and cost. The particle diameter of the particle silica is preferably from not smaller than 30% to not greater than 100%, more preferably from not smaller than 35% to not greater than 80%, even more preferably from not smaller than 40% to not greater than 60% of the thickness of the low refractive index layer. When the thickness of the low refractive index layer is 100 nm, the particle diameter of the particle silica is preferably from not smaller than 30 nm to not greater than 100 nm, more preferably from not smaller than 35 nm to not greater than 80 nm, even more preferably from not smaller than 40 nm to not greater than 60 nm. When the particle diameter of the particle silica is too small, the resulting effect of enhancing scratch resistance is deteriorated. On the contrary, when the particle diameter of the particle silica is too great, the resulting low refractive index layer has a fine unevenness on the surface thereof, causing the deterioration of external appearance such as black image tone and density and integrated reflectance. The particle silica may be either crystalline or amorphous or may be monodisperse or agglomerated so far as it has a predetermined range of particle diameter. The most desirable form of the particle silica is sphere. However, the form of the particle silica may be irregular.

In order to further reduce the rise of the refractive index of the low refractive index layer, it is preferred that a hollow particle silica be used. Further, one or more particle silicas having a particle diameter of less than 25% % of the thickness of the low refractive index layer are preferably used in combination with the particle silica having the aforementioned range of particle diameter.

The spread of the silica is preferably from 1 mg/m$^2$ to 100 mg/m$^2$, more preferably from 5 mg/m$^2$ to 80 mg/m$^2$, even more preferably from 10 mg/m$^2$ to 60 mg/m$^2$. When the spread of the silica is too small, the resulting effect of enhancing scratch resistance is deteriorated. On the contrary, when the spread of the silica is too great, the resulting low refractive index layer has a fine unevenness on the surface thereof, causing the deterioration of external appearance such as black image tone and density and integrated reflectance.

In addition to the inorganic filler silica having a particle diameter of from not smaller than 30% to not greater than 100% of the thickness of the low refractive index layer, an inorganic filler silica having a particle diameter of less than 25% of the thickness of the low refractive index layer is preferably used.

The small size inorganic filler silica can occur in the gap between the large size inorganic filler silica particles and thus can make contribution as a retainer for the large size inorganic filler silica particles.

The particle diameter of the small size inorganic filler silica particles is preferably from not smaller than 1 nm to not greater than 20 nm, more preferably from not smaller than 5 nm to not greater than 15 nm, particularly from not smaller than 10 nm to not greater than 15 nm if the thickness of the low refractive index layer is 100 nm. When the particle diameter of the small size inorganic filler silicaparticles is too small, it adds to the cost of raw materials to disadvantage. On the contrary, when the particle diameter of the small size inorganic filler silica particles is too great, the small size inorganic filler silica particles cannot be distinguished from the large size silica particles, making no sense.

The particle silica may be subjected to physical surface treatment such as plasma discharge treatment and corona discharge treatment or chemical surface treatment with a surface active agent, silane coupling agent or the like to stabilize its dispersion in the dispersion or coating solution or enhance its affinity for or adhesion to the binder component. The use of a coupling agent is particularly preferred. As the coupling agent there is preferably used an alkoxymetal compound (e.g., titanium coupling agent, silane coupling agent). For the particle silica, the silane coupling treatment is particularly effective.

The surface treatment agent for the inorganic filler of the low refractive index layer may be used before the preparation of the low refractive index layer coating solution to make previous surface treatment. However, the surface treatment agent is preferably added again during the preparation of the low refractive index layer coating solution as an additive so that it is incorporated in the low refractive index layer. The particle silica preferably has been previously dispersed and liquefied to reduce the burden on production.

At least one of the hard coat layer and the low refractive index layer preferably comprises a hydrolyzate and/or partial condensate of organosilane compound, i.e., so-called sol component (hereinafter called so) incorporated therein from the standpoint of scratch resistance.

The organosilane compound to be used herein is represented by the following general formula (3)

$$(R^{10)}{}_{m}\text{-Si}(X)_{4-m} \qquad 3$$

In the general formula (3), $R^{10}$ represents a substituted or unsubstituted alkyl or aryl group.

X represents a hydrolyzable group. Examples of the hydrolyzable group include alkoxy groups (preferably an alkoxy group having from 1 to 5 carbon atoms, e.g., methoxy group, ethoxy group), halogen atoms (e.g., Cl, Br, I), and $R^2COO$ (in which $R^2$ is preferably a hydrogen atom or an alkyl group having from 1 to 5 carbon atoms such as $CH_3COO$ and $C_2H_5COO$). Preferred among these hydrolyzable groups are alkoxy groups. Particularly preferred among these alkoxy groups are methoxy group and ethoxy group.

The suffix m represents an integer of from 1 to 3. When there are a plurality of $R^{10}$'s or X's, they may be the same or different. The suffix m is preferably 1 or 2, particularly 1.

The substituents contained in $R^{10}$ are not specifically limited. Examples of these substituents include halogen atoms (e.g., fluorine, chlorine, bromine), hydroxyl groups, mercapto groups, carboxyl groups, epoxy groups, alkyl groups (e.g., methyl, ethyl, i-propyl, propyl, t-butyl), aryl groups (e.g., phenyl, naphthyl), aromatic heterocyclic groups (e.g., furyl, pyrazolyl, pyridyl), alkoxy groups (e.g., methoxy, ethoxy, i-propaxy, hexyloxy), aryloxy groups (e.g., phenoxy), alkylthio groups (e.g., methylthio, ethylthio), axylthio groups (e.g., phenylthio), al kenyl groups (e.g., vinyl, 1-propenyl), acyloxy groups (e.g., acetoxy, acryloyloxy, methacryloyloxy), alkoxycarbonyl groups (e.g., methoxycarbonyl, ethoxycarbonyl), aryloxycarbonyl groups (e.g., phenoxycarbonyl), carbamoyl groups (e.g., carbamoyl, N-methylcarbamoyl, N,N-dimethylcarbamoyl N-methyl-N-octylcarbamoyl), and acylamino groups (e.g., acetylamino, benzoylamino, acrylamino, methacrylamino). These substituents may be further substituted.

When there are a plurality of R10's, at least one of them is preferably a substituted alkyl or aryl group. Preferred among these substituted alkyl or aryl groups is an organosilane compound having a vinyl-polymerizable substituent represented by the following general formula (4):

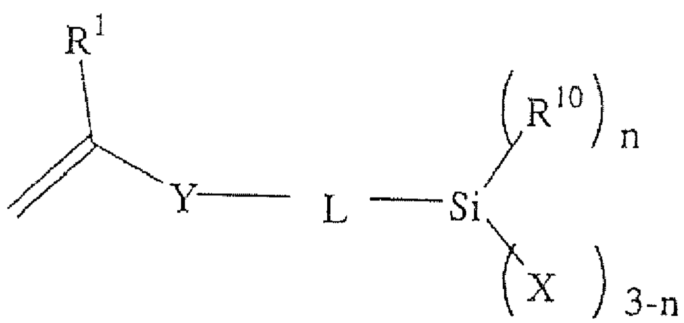

In the general formula (4), R1 represents a hydrogen atom, alkyl group (e.g., methyl, ethyl), alkoxy group (e.g., methoxy, ethoxy), alkoxycarbonyl group (e.g., methoxycarbonyl, ethoxycarbonyl), cyano group or halogen atom (e.g., fluorine, chlorine). Preferred among these groups are hydrogen atom, methyl group, methoxy group, methoxycarbonyl group, cyano group, fluorine atom and chlorine atom. Even more desirable among these groups are hydrogen atom, methyl group, methoxycarbonyl group, fluorine atom and chlorine atom. Particularly preferred among these groups are

hydrogen atom and methyl group.

Y represents a single bond, ester group, amide group, ether group or urea group. Preferred among these groups are single bond, ester group and amide group. Even more desirable among these groups are single bond and ester group. Particularly preferred among these groups is ester group.

L represents a divalent connecting group. Specific examples of the divalent connecting group include substituted or unsubstituted alkylene groups, substituted or unsubstituted arylene groups, substituted or unsubstituted alkylene groups having connecting groups (e.g., ether, ester, amide) thereinside, and substituted or unsubstituted arylene groups having connecting groups thereinside. Preferred among these divalent connecting groups are substituted or unsubstituted alkylene groups, substituted or unsubstituted arylene groups, and alkylene groups having connecting groups there inside. Even more desirable among these divalent connecting groups are unsubstituted alkylene groups, unsubstituted arylene groups, and alkylene groups having connecting groups formed by ether or ester thereinside. Particularly preferred among these divalent connecting groups are unsubstituted alkylene groups and alkylene groups having connecting groups formed by ether or ester thereinside. Examples of the substitutents on these groups include halogen atoms, hydroxyl groups, mercapto groups, carboxyl groups, epoxy groups, alkyl groups, and aryl groups. These substituents may be further substituted.

The suffix n represents 0 or 1. When there are a plurality of X's, they may be the same or different. The suffix n is preferably 0.

$R^{10}$ is as defined in the general formula (3). Preferred among these groups are substituted or unsubstituted alkyl groups, and unsubstituted aryl groups. Even more desirable among these groups are unsubstituted alkyl groups and unsubstituted aryl groups.

Y is as defined in the general formula (3). Preferred among these groups are halogen atoms, hydroxyl groups, and unsubstituted alkoxy groups. More desirable among these groups are chlorine atoms, hydroxyl groups, and unsubstituted alkoxy groups having from 1 to 6 carbon atoms. Even more desirable among these groups are hydroxyl groups, and alkoxy groups having from 1 to 3 carbon atoms. Particularly preferred among these groups is methoxy group.

Two or more of the compounds represented by the general formulae (3) and (4) may be used in combination. Specific examples of the compounds represented by the general formulae (3) and (4) will be given below, but the invention is not limited thereto.

M-1

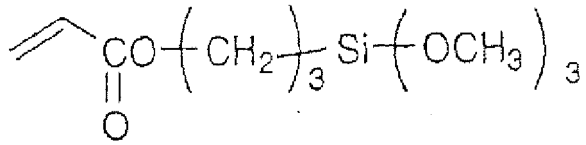

M-2

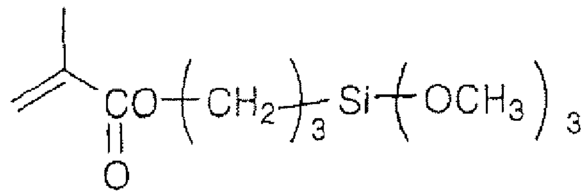

M-3

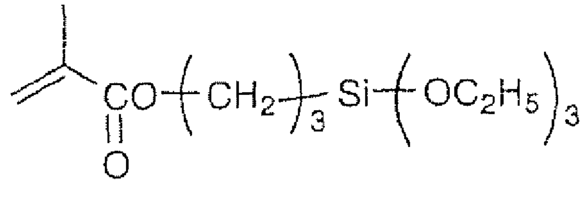

M-4

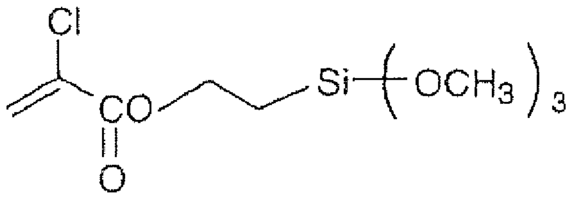

M-5

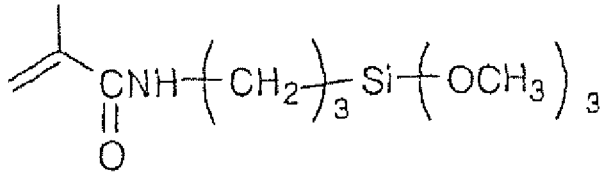

M-6

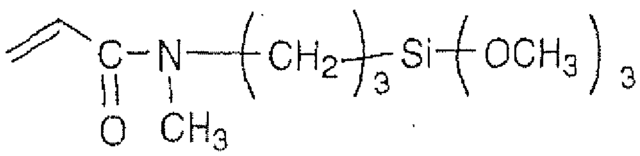

M-7

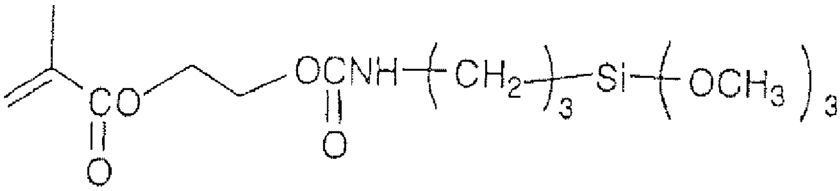

M-8

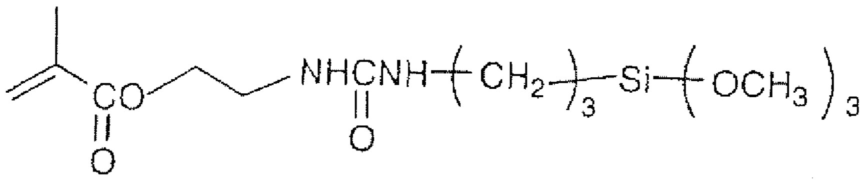

M-9

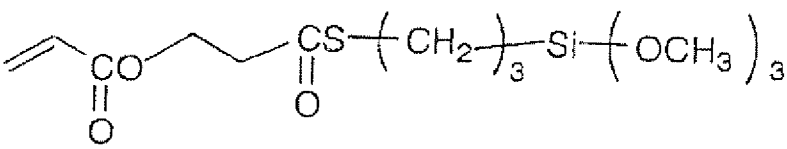

M-10

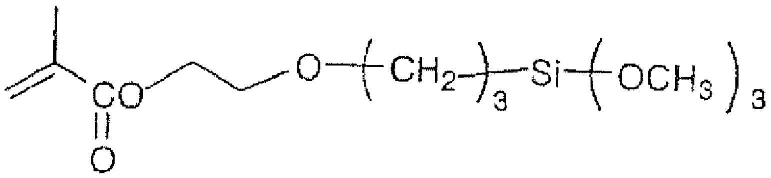

M-11

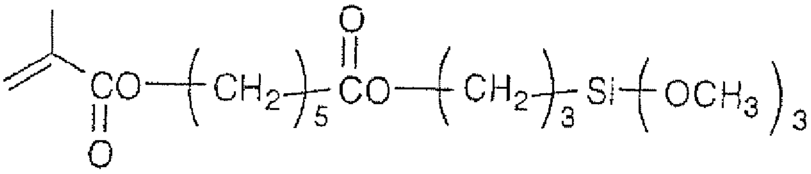

M-12

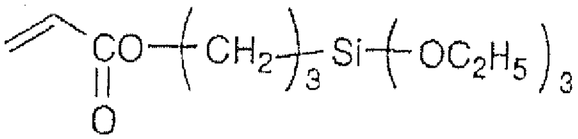

M-13

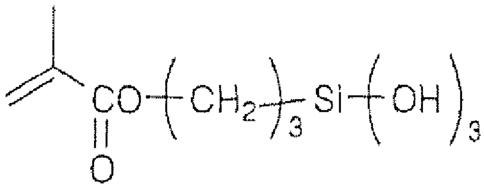

M-14

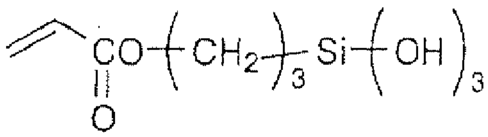

M-15

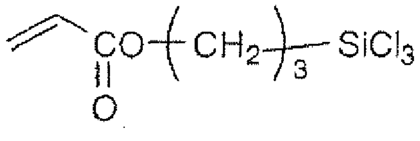

M-16 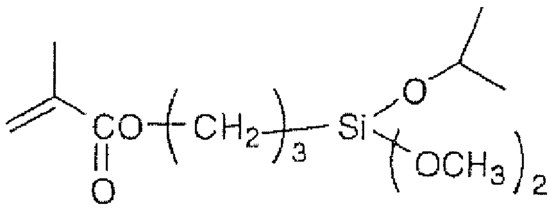

M-17 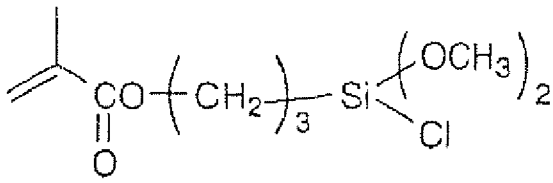

M-18 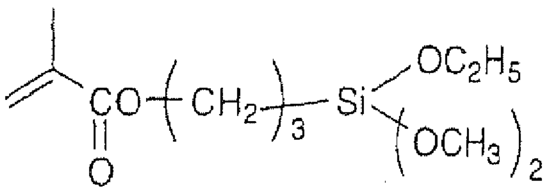

M-1 9 $CH_3$-Si-$(OC_2H_5)_3$

M-20 $C_2H_5$-Si-$(OC_2H_5)_3$

M-21 t-$C_4H_9$-Si-$(OCH_3)_3$

M-22 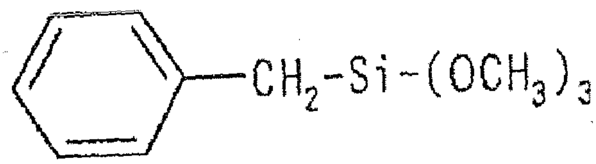

M-23 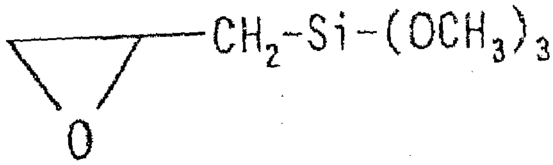

M-24 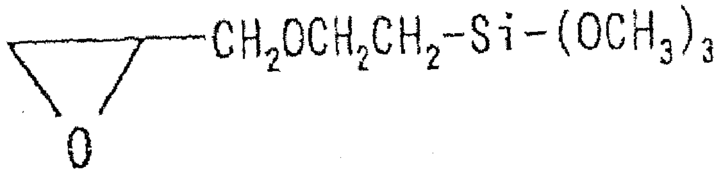

M-25 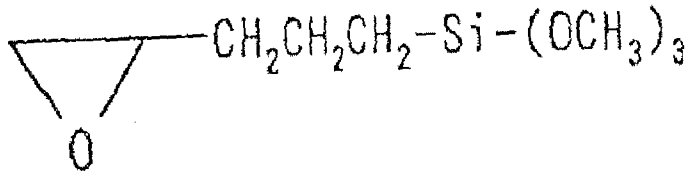

M-26 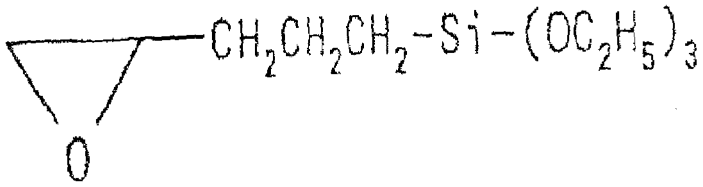

M-27 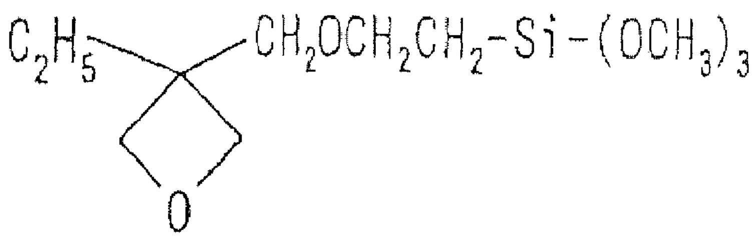

M-28 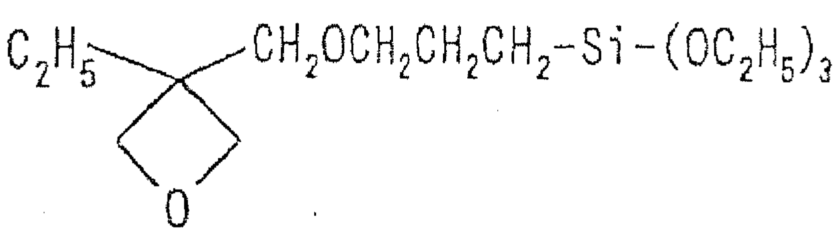

M-29 $C_3F_7CH_2CH_2$-Si-$(OC_2H_5)_3$

M-30 $C_6F_{13}CH_2CH_2$-Si-$(OC_2H_5)_3$

M-31

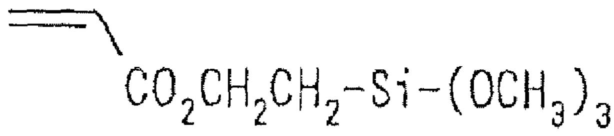

M-32

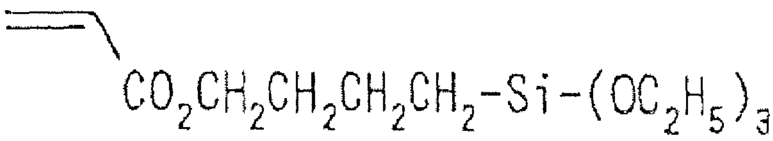

M-33

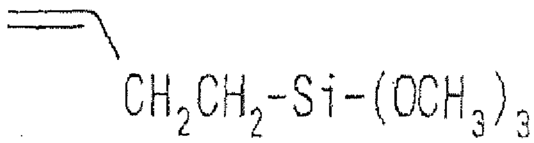

M-34

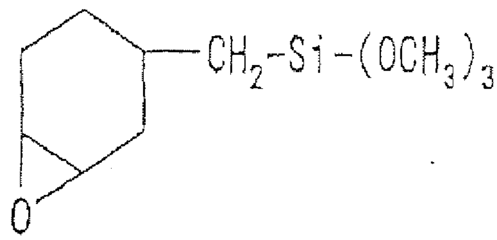

M-35

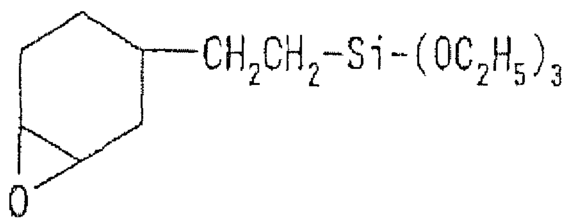

M-36

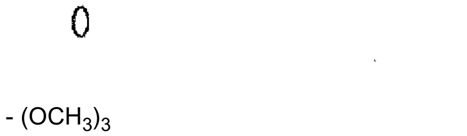

M-37 $NH_2CH_2CH_2CH_2$ - Si - $(OCH_3)_3$

M-38 HS-$CH_2CH_2CH_2$,-Si -$(OCH_3)_3$

M-39 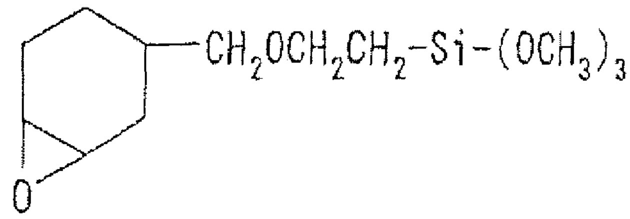

M-40 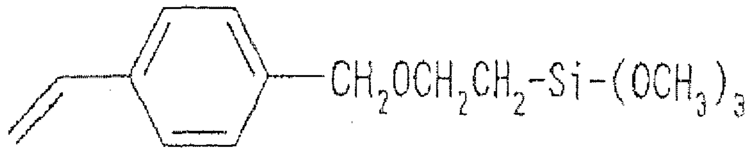

M-41 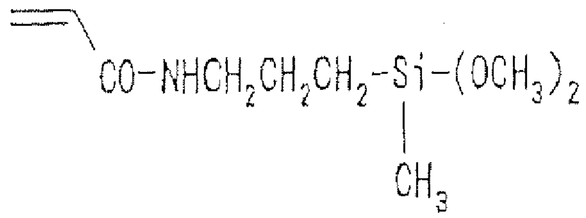

M-42 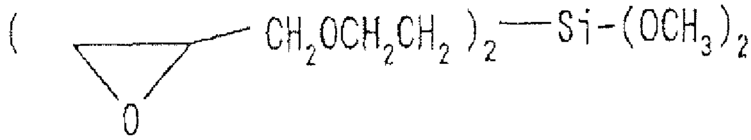

M-43 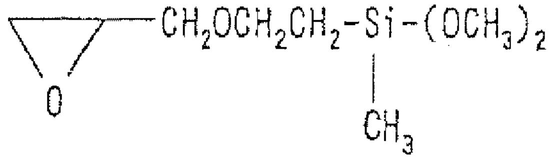

M-44 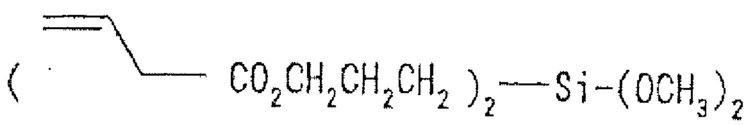

M-45 $CH_2$=CH-Si-$(OCH_3)_3$

M-46 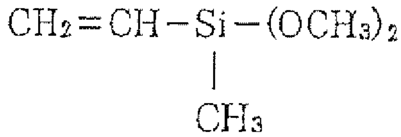

M-47 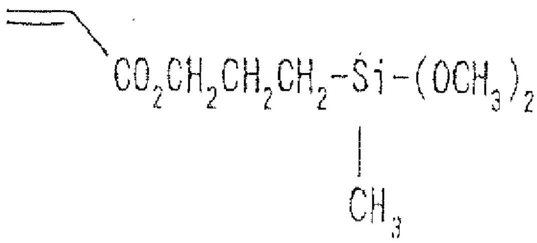

The hydrolysis/condensation reaction of the organosilane may be effected free from solvent or in a solvent. In order to uniformlymix the components an organic solvent is preferably used. Preferred examples of such an organic solvent include alcohols, aromatic hydrocarbons, ethers, ketones, and esters.

As the solvent there is preferably used one capable of dissolving the organosilane and catalyst therein. Further, the organic solvent is preferably used as coating solution or a part thereof from the standpoint of production efficiency. A solvent which doesn't impair the solubility or dispersibility of the fluorine-containing polymer or other materials when mixed with them is preferred.

Examples of alcohols to be used as organic solvents include monovalent alcohols and divalent alcohols. Preferred among these monovalent alcohols are saturated aliphatic alcohols having from 1 to 8 carbon atoms. Specific examples of these alcohols include methanol, ethanol, n-propyl alcohol, i-propyl alcohol, n-butyl alcohol, sec-butyl alcohol, tert-butyl alcohol, ethylene glycol, diethylene glycol, triethylene glycol, ethylene glycol monobutyl ether, and ethylene glycol monoethyl ether acetate.

Specific examples of the aromatic hydrocarbons include benzene, toluene, and xylene. Specific examples of the ethers include tetrahydrofurane, and dioxane. Specific examples of the ketones include acetone, methyl ethyl ketone, methyl isobutyl ketone, and diisobutyl ketone. Specific examples of the esters include ethyl acetate, propyl acetate, butyl acetate, and propylene acetate.

These organic solvents maybe used singly or in combination of two or more thereof.

The concentration of the solid content in the aforementioned reaction is not specifically limited but is normally from 1% to 90%, preferably from 20% to 70%.

The hydrolysis/condensation reaction of the organosilane is preferably effected in the presence of a catalyst. Examples of the catalyst employable herein include inorganic acids such as hydrochloric acid, sulfuric acid and nitric acid, organic acids such as oxalic acid, acetic acid, formic acid, methanesulfonic acid and toluenesulfonic acid, inorganic bases such as sodium hydroxide, potassium hydroxide and ammonia, organic bases such as triethylamine and pyridine, and metal alkoxides such as triisaprapoxy aluminum and tetrabutoxy zirconium. Preferred among these catalysts are acid catalysts (inorganic acids, organic acids) from the standpoint of production stability or storage stability of sol. Preferred among these inorganic acids are hydrochloric acid and sulfuric acid. Preferred among these organic acids are those having an acid dissociation constant pKa (25°C) of not greater than 4.5 in water. More desirable among these catalysts are hydrochloric acid, sulfuric acid and those having an acid dissociation constant of not greater than 3.0 in water. Even more desirable among these catalysts are hydrochloric acid, sulfuric acid and those having an acid dissociation constant of not greater than 2.5 in water. Even more desirable among these catalysts are those having an acid dissociation constant of not greater than 2.5 in water. Preferred among these catalysts are metanesulfonic acid, oxalic acid, phthalic acid and malonic acid. Particularly preferred among these organic acids is oxalic acid.

The hydrolysis / condensation, reaction of the organosilane is normally carried out by adding water to the organosilane in an amount of from 0.3 to 2 mols, preferably from 0.5 to 1 mols per mol of the hydrolyzable group in the organosilane, and then stirring the reaction mixture at a temperature of from 25°C to 100°C in the presence or absence of, preferably in the presence of the aforementioned solvent.

In the case where the hydrolyzable group is an alkoxide and the catalyst is an organic acid, the amount of

water can be reduced to allow the carboxyl group or sulfo group of the organic acid to provide protons. The amount of water to be added is from 0 to 2 mols, preferably from 0 to 1.5 mols, more preferably from 0 to 1 mol, particularly from 0 to 0.5 mols per mol of the alkoxide group of the organosilane. When an alcohol is used as a solvent, it is also preferred that water be not substantially added.

The amount of the catalyst, if it is an inorganic acid, to be used is from 0.01 to 10 mol-%, preferably from 0.1 to 5 mol-% based on the amount of the hydrolyzable group. The optimum amount of the catalyst, if it is an organic acid, to be used differs with the added amount of water and is from 0.01 to 10 mol-%, preferably from 0.1 to 5 mol-% based on the amount of the hydrolyzable group, if water is added, or from 1 to 500 mol-%, preferably from 10 to 200 mol-%, more preferably from 20 to 200 mol-%, even more preferably from 50 to 150 mol-%, particularly from 50 to 120 mol-% based on the amount of the hydrolyzable group, if water is not substantially added.

The reaction is carried out by stirring the reaction mixture at a temperature of from 25°C to 100°C. The reaction is preferably adjusted properly by the reactivity of the organosilane.

The proper content of the organosilane sol differs from layer to layer. The amount of the organosilane sol to be incorporated in the low refractive index layer is preferably from 0.1 to 50% by weight, more preferably from 0.5 to 20% by weight, particularly from 1 to 10% by weight based on the total solid content of the layer. The amount of the organosilane sol to be incorporated in the layers other than the low refractive index layer is preferably from 0.001 to 50% by weight, more preferably from 0.01 to 20% by weight, even more preferably from 0.05 to 10% by weight, particularly from 0.1 to 5% by weight based on the total solid content of the layer.

The amount of the organosilane sol to be incorporated in the low refractive index layer is preferably from 5 to 100% by weight, more preferably from 5 to 40% by weight, even more preferably from 8 to 35% by weight, particularly from 10 to 30% by weight based on the amount of the fluorine-containing polymer contained in the low refractive index layer. When the amount of the organosilane sol to be used is too small, the effect of the invention can be difficultly exerted. On the contrary, when the amount of the organosilane sol to be used is too great, the resulting low refractive index layer has a raised refractive index or deteriorated film shape and surface conditions.

The anti-reflection film of the invention preferably comprises an inorganic filler incorporated in the various layers provided on the transparent support. The inorganic filler to be incorporated in the various layers maybe the same or different. The kind and added amount of the inorganic filler are preferably adjusted properly depending on the requirements such as refractive index, film strength, film thickness and spreadability of the various layers.

Referring to the formulation of solvent for the coating solution to be used in the formation of the low refractive index layer according to the invention, either a single solvent or a mixture of solvents may be used. In the case where solvents are used in admixture, the proportion of solvents having a boiling point of not higher than 100°C is preferably from 50% to 100%, more preferably from 80% to 100%, even more preferably from 90% to 100%, even more preferably 100%. When the proportion of the solvents having a boiling point of not higher than 100°C is not greater than 50%, the resulting low refractive index layer is dried at a very low rate, giving a coat layer having deteriorated surface conditions and an uneven thickness that causes the deterioration of optical properties such as reflectance. In the invention, these problems can be solved by the use of a coating solution containing much solvents having a boiling point of not higher than 100°C.

Examples of the solvents having a boiling point of not higher than 100°C include hydrocarbons such as hexane (boiling point: 68.7°C (°C will be hereinafter omitted), heptane (98.4), cyclohexane (80.7) and benzene (80.1), halogenated hydrocarbons such as dichloromethane (39.8), chhloroform (61.2), carbon tetrachloride (76.8), 1, 2-dichloroethane (83.5) and trichloroethylene (87.2), ethers such as diethyl ether (34.6), diisopropyl ether (68.5), dipropyl ether (90.5) and tetrahydrofurane (66), esters such as ethyl formate (54.2), methyl acetate (57.8), ethyl acetate (77.1) and isopropyl acetate (89), ketones such as acetone (56.1) and 2-butanone (=methyl ethyl ketone; 79.6), alcohols such as methanol (64.5), ethanol (78.3), 2-propanol (82.4) and 1-propanol (97.2), cyano compounds such as acetonitrile (81.6) and propionitrile (97.4), and carbon disulfide (46.2). Preferred among these solvents are ketones and esters. Particularly preferred among these solvents are ketones. Particularly preferred among these ketones is 2-butanone.

Examples of the solvents having a boiling point of not lower than 100°C include octane (125.7), toluene (110.6), xylene (138), tetrachloroethylene (121.2), chlorobenzene (131.7), dioxane (101.3), dibutyl ether (142.4), isobutyl acetate (118), cyclohexanone (155.7), 2-methyl-4-pentanone (= MIBK; 115.9), 1-butanol (117.7), N,N-dimethylformamide (153), N,N-dimethylacetamide (166), and dimethyl sulfoxide (189). Preferred among these solvents are cyclohexanone and 2-methyl-4-pentanone.

By diluting the low refractive index layer components with solvents according to the aforementioned formulation, the respective layer coating solutions are prepared. The concentration of these coating solutions are preferably adjusted properly taking into account the viscosity of the coating solutions, the specific gravity of the layer material, etc but are prefer ably from 0.1 to 20% by weight, more preferably from 1 to 10% by weight.

As the transparent support for the anti-reflection film of the invention there is preferably used a plastic film. Example of the polymer constituting the plastic film include cellulose esters (e.g., triacetyl cellulose, diacetyl cellulose, typically TAC-TD80U and TD80UF, produced by Fuji Photo Film Co., Ltd.), polyamides, polycarbonates, polyesters

(e.g., polyethylene terephthalate, polyethylene naphthalate), polystyrenes, polyolefins, norbornene-based resins (ARTON (trade name), produced by JSR Corporation), and amorphous polyolefins (ZEONEX (trade name), produced by ZEON Corporation) . Preferred among these polymers are triacetyl cellulose, polyethylene terephthlate, and polyethylene naphthalate. Particularly preferred among these polymers is triacetyl cellulose.

The triacetyl cellulose film consists of a single layer or a plurality of layers. The single layer triacetyl cellulose film is prepared by a drum casting method as disclosed in JP-A-7-11055 or a band casting method. The triacetyl cellulose film of a plurality of layers is prepared by a so-called co-casting method as disclosed in JP-A-61-94725, JP-B-62-43846, etc. In other words, a raw material flake is dissolved in a solvent such as halogenated hydrocarbons (e.g., dichloromethane), alcohols (e.g., methanol, ethanol, butanol), esters (e.g., methyl formate, methyl acetate) and ethers (e.g., dioxane, dioxolane, diethyl ether). To the solution are optionally added various additives such as plasticizer, ultraviolet absorber, deterioration inhibitor, lubricant and release accelerator to produce a solution (referred to as "dope"). The dope is then casted over a support made of a horizontal endless metal belt or rotating drum using a dope supplying unit (referred to as "die"). In the case where a single layer triacetyl cellulose film is prepared, a single dope is casted into a single layer. In the case where a triacetyl cellulose film consisting of a plurality of layer is prepared, a low concentration dope is casted with a high concentration cellulose ester dope in such an arrangement that the low concentration dope layer is disposed on the both sides of the high concentration cellulose ester dope layer. The dope layer is then somewhat dried on the support. The resulting film provided with rigidity is released from the support, and then passed through a drying zone using various conveying units to remove the solvent.

For the details of cellulose acetate film substantially free of halogenated hydrocarbon such as dichloromethane and method for the preparation thereof, reference can be made to Japan Institute of Invention and innovation's Kokai Giho No. 2001-1745 (issued on March 15, 2001).

In the case where the anti-reflection film of the invention is used in a liquid crystal display device, the anti-reflection film is disposed on the outermost surface of the display with an adhesive layer provided on one side thereof. When the transparent support is a triacetyl cellulose film, a triacetyl cellulose film is used as a protective film for protecting the polarizing layer of the polarizing plate. Therefore, the anti-reflection film of the invention is preferably used as a protective film as such from the standpoint of cost.

In the case where the anti-reflection film of the invention is disposed on the outermost surface of the display with an adhesive layer provided on one side thereof or used as protective film for polarizing plate as such, it is preferred that the transparent support be provided with an outermost layer mainly composed of a fluorine-containing polymer which is then subjected to saponification to make sufficient adhesion. The saponification is ca.rried out by a known method e.g., by dipping the film in an alkaline solution for a proper period of time. It is preferred that the film which has thus been dipped in an alkaline solution be thoroughly rinsed with water or dipped in and neutralized with a dilute acid to prevent the alkaline component from remaining in the film.

The saponification causes the transparent support to be hydrophilicizedon the side thereof opposite the outermost layer side.

The surface thus hydrophilicized is effective particularly for the enhancement of the adhesion to a polarizing film mainly composed of a polyvinyl alcohol. The surface thus hydrophilicized also can difficultly attract dust in the air, making it difficult for dust to enter the gap between the polarizing film and the anti-reflection film during bonding to the polarizing film. Thus, the hydrophilicized surface is effective also for the prevention of occurrence of point defects due to dust.

The saponification is preferably effected such that the transparent support has a contact angle of not greater than 40°, more preferably not greater than 30°, particularly not greater than 20° with respect to water on the side thereof opposite the outermost layer side.

The specific method for alkaline saponification can be selected from the following two methods. The method (1) is excellent because it allows treatment at the same step as that for general-purpose triacetyl cellulose film. However, the method (1) is disadvantageous in that saponification proceeds up to the surface of the anti-reflection layer, causing the alkaline hydrolysis and deterioration of the film, and the remaining of the saponifying solution causes the occurrence of stain. In this case, the method (2) is excellent although it requires a special process.

(1) An anti-reflection film is formed on the transparent support. The transparent support is then dipped in an alkaline solution at least once to saponify the back surface of the film.

(2) An alkaline solution is spread over the transparent support on the side thereof opposite the side on which an anti-reflection film is formed before or after the formation of the anti-reflection layer on the transparent support. The transparent support is heated and then rinsed and/or neutralized to saponify only the back surface of the film.

The anti-reflection film of the invention can be formed by the following method, but the invention is not limited thereto.

Firstly, coating solutions comprising components for forming various layers are prepared. Subsequently, the

coating solution for forming the hard coat layer is spread over the transparent support by a dip coating method, air knife coating method, curtain coating method, roller coating method, wire bar coating method, gravure coating method or extrusion coating method (see US Patent 2, 681, 294), and then heated and dried. Particularly preferred among these coating methods is microgravure coating method. Thereafter, the coat layer is irradiated with light or heated to cause the polymerization of the monomers for forming the hard coat layer so that the coat layer is cured. Thus, the hard coat layer is formed.

If necessary, the hard coat layer consists of a plurality of layers. The spreading and drying of a smooth hard coat layer may be effected before the formation of the hard coat layer in the same manner as described above.

Subsequently, the coating solution for forming the low refractive index layer is spread over the hard coat layer, e . g. , over the antiglareness hard coat layer, and then irradiated with light or heated to form the low refractive index layer. Thus, the anti-reflection film of the invention is obtained.

Referring to the microgravure coating method to be used in the invention, a gravure roll having a diameter of from about 10 to 100 mm, preferably from about 20 to 50 mm on the entire periphery of which a gravure pattern is engraved is rotated under the support in the direction opposite the direction of conveyance of the support. At the same time, excess coating solution is scraped off the surface of the gravure roll with a doctor blade. In this manner, a constant amount of the coating solution is transferred to the lower surface of the support at the position where the upper surface of the support is free. Thus, at least one of the hard coat layer and the low refractive index layer containing a fluorine-containing polymer can be formed on one side of the support which is continuously wound off the roll using this microgravure coating method.

Referring to the spreading conditions in the microgravure coating method, the number of lines of gravure pattern engraved on the gravure roll is preferably from 50 to 800/inch, more preferably from 100 to 300/inch, the depth of gravure pattern is preferably from 1 to 600 μm, more preferably from 5 to 200 μm, the rotary speed of the gravure roll is preferably from 3 to 800 rpm, more preferably from 5 to 200 rpm, and the conveyance speed of the support is preferably from 0.5 to 100 m/min, more preferably from 1 to 50 m/min.

The polarizing plate is mainly composed of two sheets of protective film between which the polarizing film is interposed. The anti-reflection film of the invention is preferably used as at least one of the two sheets of protective film between which the polarizing film is interposed. By allowing the anti-reflection film of the invention to act also as a protective film, the production cost of the polarizing plate can be reduced. Further, by disposing the anti-reflection film of the invention on the outermost layer, a polarizing plate can be provided which is not subject to reflection of outdoor daylight, etc. and exhibits an excellent scratch resistance and stainproofness.

As the polarizing film there maybe used a known polarizing film or a polarizing film cut out of a polarizing film in a continuous length the absorption axis of which is neither parallel nor perpendicular to the longitudinal direction. The polarizing film in a continuous length the absorption axis of which is neither parallel nor perpendicular to the longitudinal direction is prepared in the following manner.

In some detail, a polymer film which is being continuously fed is given a tension so that is stretched while being held at the both ends thereof by a retaining unit to produce a polarizing film. The film is stretched by a factor of from 1.1 to 20.0 at least in the crosswise direction. The difference in moving speed in the longitudinal direction between the retaining unit on the both ends of the film is not greater than 3%. The film is stretched in such a manner that the film is moved at an angle of from 20 to 70° from the direction of substantial stretching of the film at the exit of the step of retaining the both ends of the film while being bent with the both ends thereof held. It is particularly preferred that the film is stretched at angle of 45° (± 0°). For the details of this stretching method, reference can be made to JP-A-2002-86554.

The anti-reflection film of the invention can be applied to image display devices such as liquid crystal display device (LCD), plasma display panel (PDP), electroluminscence display (ELD) and cathode ray tube display device (CRT). The anti-reflection film of the invention has a transparent support and thus is bonded to the image display surface of the image display device on the transparent support side thereof.

When used as one of two sheets of surface protective film for polarizing film, the anti-reflection film of the invention can be used for transmission type, reflection type and semi-transmission type liquid crystal display devices of mode such as twisted nematic (TN), super twisted nematic (STN), vertical alignment (VA), in-plane switching (IPS) and optically compensated bend cell (OCB).

Examples of VA mode liquid crystal cells include (1) VA mode liquid crystal cells in a narrow sense which allow orientation of rod-like liquid crystal molecules in substantially the vertical direction when no voltage is applied or in substantially the horizontal direction when a voltage is applied (as described in JP-A-2-176625), (2) MVA mode liquid crystal cells obtained by enhancing VA mode to multidomain mode to increase the viewing angle (as described in SIE97, Digest of tech. Papers (preprint), 28 (1997) 845), (3) n-ASM mode liquid crystal cells which allow orientation of rod-like liquid crystal molecules in substantially the vertical direction when no voltage is applied or allow twisted multidomain orientation when a voltage is applied (as described in Preprint Nos. 58 - 59 (1988) of Japan Seminar of Liquid Crystal) and (4) SUVAIVAL mode liquid crystal cells (reported in LCD International 98).

OCB mode liquid crystal cell is a liquid crystal display device comprising a bend orientation mode liquid crystal

cell having rod-like liquid crystal molecules oriented in substantially opposite directions (symmetrically) from upper to lower and is disclosed in US Patents 4, 583, 825 and 5, 410, 422. Since the rod-like liquid crystal molecules are symmetrically oriented from upper to lower in the liquid crystal cell, the bend orientation mode liquid crystal cell has a function of self optical compensation. Therefore, this liquid crystal mode is also referred to as "OCB (Optically Compensation Bend) liquid crystal mode". The bend orientation mode liquid crystal display device is advantageous in that it has a high response.

ECB mode liquid crystal cell has rod-like liquid crystal molecules oriented in substantially the horizontal direction when no voltage is applied and has been most widely used as color TFT liquid crystal display device. ECB mode liquid crystal cell is reported in many references, e.g., "EL, PDP, LCD Display", Toray Research Center, 2001.

Referring particularly to TN mode or IPS mode liquid crystal display devices, as described in JP-A-2001-100043, the use of an optical compensation film having an effect of increasing the viewing angle in a polarizing film on the side thereof opposite the anti-reflection film of the invention which is used as one of two sheets of protective film makes it possible to obtain a polarizing plate which exerts both an anti-reflection effect and an effect of increasing the viewing angle by one sheet to particular advantage.

[Example]

The invention will be further described in the following examples, but the invention is not limited thereto. The terms "parts" and "%" as used hereinafter are meant to indicate "parts by weight" and "% by weight", respectively, unless otherwise specified.

(Preparation of organosilane sol composition a)

In a reaction vessel equipped with an agitator and a reflux condenser were charged 161 parts of acroyloxypropyl trimethoxysilane, 123 parts of oxalic acid and 415 parts of ethanol which were then mixed. The reaction mixture was reacted at 70°C for 5 hours, and then allowed to cool to room temperature to obtain an organosilane sol composition a.

(Preparation of hard coat layer coating solution A)

47,600 parts by weight of a commercially available zirconia-containing UV-curing hard coat solution (Desolite 27404, produced by JSR Corporation; solid content concentration: 61.2%; zirconia content in solid content: 69.6%; polymerizable monomers and polymerization initiator incorporated), 14,400 parts by weight of a mixture of dipentaerythritol pentaacrylate and dipentaerythritol hexaacrylate (DPHA, produced by NIHON KAYAKU CO., LTD.) and 2,700 parts by weight of methyl ethyl ketone were mixed and stirred. To the solution thus obtained were then added 14,800 parts by weight of a dispersion obtained by dispersing a particle silica having an average particle diameter of 1.5 μm (SEAHOSTAR KE-P150, produced by NIPPON SHOKUBAI CO., LTD.; refractive index: 1.45) wi th methyl isobutyl ketone as a dispersing medium at 10,000 rpm using a polytron dispersing machine for 40 minutes such that the solid content in the dispersion reached 30%. The mixture was stirred. To the mixture were then added 4,800 parts by weight of a silane coupling agent KBM-5103 (produced by Shin-etsu Chemical Co., Ltd.). The mixture was then stirred to prepare a hard coat layer intermediate solution (1). The particle silica used was a particle having a CP value of 2.4 μm and a sharp distribution of particle size, which meet the relationship: $dmax-d_{AV} \leqq 1\ \mu m$, without subjected to additional classification.

The hard coat layer intermediate solution (1) thus prepared was then subjected to circulatory filtration through a profile filter having a pore diameter of 7 μm produced by Pall Corporation for 8 hours.

80,000 parts by weight of the aforementioned hard coat layer intermediate solution (1) which had been subjected to circulatory filtration were transferred into a preparation tank. To the solution were then added 6,450 parts by weight of a dispersion obtained by subjecting a particulate crosslinked PMMA having an average particle diameter of 3 μm (MX-300, produced by The Soken Chemical & Engineering Co., Ltd.; refractive index: 1.49) to additional classification using an air classifier such that it has a CP value (= 11 μm) as shown in Tables 1 to 4 to remove coarse particles (the average particle diameter remained almost the same as before classification), and then dispersing the particle with methyl isobutyl ketone as a dispersing medium at 10, 000 rpm using a polytron dispersing machine such that the solid content in the dispersion reached 25%. The mixture was then stirred. To the mixture were then added 8,500 parts by weight of methyl isobutyl ketone. The mixture was then thoroughly stirred to complete a hard coat layer coating solution A. The solution thus prepared was spread, and then cured by irradiation with ultraviolet rays to obtain a coat layer having a refractive index of 1.62. During the spreading of the solution A, the solution A was subjected to circulatory filtration through a profile filter having a pore diameter of 7 μm produced by Pall Corporation. Thus, a hard coat layer was formed.

(Preparation of low refractive index layer coating solution A)

15 kg of a heat crosslinkable fluorine-containing polymer having a refractive index of 1.42 (JN-7228, produced by JSR Corporation; solid content concentration: 6%), 0.7 kg of MEK-ST (methyl ethyl ketone dispersion of colloidal silica having an average particle diameter of 15 nm produced by NISSAN CHEMICAL INDUSTRIES, LTD.; solid content concentration: 30%), 0.4 kg of the organosilane sol composition a, 3 kg of methyl ethyl ketone and 0.6 kg of cyclohexanone were mixed with stirring, and then filtered through a polypropylene filter having a pore diameter of 1 μm to prepare a low refractive index layer coating solution A.

[Preparation of Example Sample 1]

(1) Provision of hard coat layer

Using a microgravure roll having a diameter of 50 mm and a gravure pattern of 135 lines per inch and a depth of 40 μm and a doctor blade, the aforementioned hard coat layer coating solution A was spread over a triacetyl cellulose film having a thickness of 80 μm (TAC-TD80UL, produced by Fuji Photo Film Co., Ltd.) which was being wound off the roll at a gravure roll rotary speed of 30 rpm and a conveyance speed of 10 m/min, dried at 60°C for 150 seconds, and then irradiated with ultraviolet rays from a 160 W/cm air-cooled metal halide lamp (produced by EYEGRAPHICS CO., LTD.) at an illuminance of 400 mW/$cm^2$ and a dose of 300 mJ/cm2 in an atmosphere purged with nitrogen so that the coat layer was cured to form a hard coat layer to a thickness of 2.9 μm. The coated film was then wound.

(2) Provision of low refractive index layer

Using a microgravure roll having a diameter of 50 mm and a gravure pattern of 200 lines per inch and a depth of 40 μm and a doctor blade, the aforementioned low refractive index layer coating solution A was spread over the triacetyl cellulose film thus provided with a hard coat layer which was being wound off the roll at a gravure roll rotary speed of 30 rpm and a conveyance speed of 15 m/min, dried at 120°C for 150 seconds and then at 140°C for 8 minutes, and then irradiated with ultraviolet rays from a 240 W/cm air-cooled metal halide lamp (produced by EYEGRAPHICS CO., LTD.) at an illuminance of 400 mW/cm2 and a dose of 600 mJ/cm2 in an atmosphere purged with nitrogen to form a low refractive index layer to a thickness of 100 nm. The coated film was then wound.

(3) Saponification of anti-reflection film

After film formation, the aforementioned sample 1 was then subjected to the following treatment.

A 1.5 N aqueous solution of sodium hydroxide was prepared and kept at 55°C. A 0.01 N diluted aqueous solution of sulfuric acid was prepared. The anti-reflection film thus prepared was dipped in the aforementioned aqueous solution of sodium hydroxide for 2 minutes, and then dipped in water so that the aqueous solution of sodium hydroxide was thoroughly washed away. Subsequently, the anti-reflection film was dipped in the aforementioned dilute aqueous solution of sulfuric acid for 1 minute, and then dipped in water so that the dilute aqueous solution of sulfuric acid was washed away. Finally, the sample was thoroughly dried at 120°C.

Thus, a saponified anti-reflection film was prepared as Example Sample 1.

(Evaluation of anti-reflection film)

The anti-reflection film thus obtained was then evaluated for the following properties.

(1) Measurement of scattered light profile

Using a Type GP-5 automatic variable-angle photometer (produced by Murakami Color Research Laboratory), the film disposed perpendicular to incident light was measured for scattered light profile in all the directions. From this profile, the intensity of scattered light at an angle of 30° with respect to the emission angle of 0° was determined.

(2) Measurement of CP value (cut point value) of coarse particles contained in particle

For the determination of CP value of the various particles, a dispersion of particles to be measured was prepared using IPA (isopropyl alcohol) as a dispersing medium. For the measurement of CP value, a Type FPIA-2100 flow particle image analyzer (produced by Sysmex Corporation) was used (IPA was used also as a flow solution during measurement). The number of particles was million. The value of the largest particle among the arbitrary million particles was defined

as CP value. Referring to the standard formulation of the dispersion, 0.05 of the particle was supersonically dispersed in 40 g of IPA with a particle dispersing surface active agent.

(3) Measurement of transmission image sharpness

Using a Type ICM-2D image clarity meter (produced by Suga Test Instruments Co., Ltd.) with an optical comb having a width of 0.5 mm, transmission image sharpness value was measured.

(4) Evaluation of antiglareness

The triacetyl cellulose film having a thickness of 80 μm which had been dipped in a 1.5 N 55°C aqueous solution of NaOH for 2 minutes, neutralized, and then rinsed (TAC-TD80U, produced by Fuji Photo Film Co., Ltd.) and the triacetyl cellulose film saponified on the back surface thereof as Example Sample 1 were bonded to the respective side of a polarizer prepared by stretching a polyvinyl alcohol to which iodine had been adsorbed so that the polarizer was protected to prepare a polarizing plate. The polarizing plate thus prepared was mounted on a 23 inch liquid crystal television set (having a Type D-BEF polarizing separation film having a polarizing selection layer (produced by Sumitomo 3M) provided interposed between the back light and the liquid crystal cell) having a transmission type TN liquid crystal display device incorporated therein to replace the viewing side polarizing plate in such an arrangement that the anti-reflection film was disposed on the outermost surface. A black image was then displayed on the screen. The antiglareness of the screen was then evaluated under indoor fluorescent lamp according to the following criterion.

1) Too low an antiglareness and much reflection of fluorescent lamp: P (poor)
2) High antiglareness that causes the initiation of deterioration of black image tone and density: F (fair)
3) Low antiglareness: F (fair)
4) Proper antiglareness and good viewability: G (good)
5) Proper antiglareness, good viewability and extremely excellent black image tone and density: E (excellent)

(5) Confirmation of the presence or absence of the effect of improving the viewing angle and the presence or absence of blurred letters

A polarizing plate prepared from the anti-reflection film thus prepared as in Example 10-B was mounted on a 23 inch liquid crystal TV set. The presence or absence of the effect of improving the viewing angle and the presence or absence of blurred letters were visually confirmed. For the criterion of evaluation, comparison was made with a polarizing plate prepared in the same manner as described above except that a Type CV FILM CV L 01A antiglareness anti-reflection film (produced by Fuji Photo Film Co., Ltd.). The antiglareness anti-reflection film was similarly mounted on the 23 inch liquid crystal TV set. The Type CV FILM CV L 01A antiglareness anti-reflection film leaves something to be desired in the range of viewing angle within which no inversion gradation occurs.

(6) Measurement of central line average roughness (Ra)

The anti-reflection film thus prepared was measured for central line average roughness (Ra) using a Type AY22 surface roughness meter (produced by Kosaka Laboratory Ltd.).

(7) Examination of point defects/measurement of coarse particles causing point defects

A 1 m x 1 m anti-reflection film terminal sampled at random was examined for point defects under a transmission light source. Bright points having a size of not smaller than 50 μm detectable by ordinary users ' eyes were then marked as point defects. This examination was conducted on 100 sheets of 1 m x 1 m terminals sampled at random. The total number of point defects thus counted was then divided by 100 to determine the average number of point defects per $m^2$. Taking into account the product yield, the average number of point defects needs to be not greater than 1 point/$m^2$, preferably not greater than 0.2 points/$m^2$, more preferably not greater than 0.04 points/$m^2$.

In Tables 1 to 4, those showing greater than 1 point defect per $m^2$ are judged poor (unacceptable, NG), those showing greater than 0.2 to not greater than 1 point defect per $m^2$ are judged fair (acceptable, OK), those showing greater than 0.04 to not greater than 0.2 point defects per $m^2$ are judged good, and those showing not greater than 0.04 per $m^2$ are judged excellent.

(8) Measurement of thickness of hard coat layer

A ultrathin section having a thickness of 50 nm in the vertical direction was sampled from the anti-reflection film thus prepared. The sample was then photographed under a transmission type electron microscope (TEM). The thickness of the hard coat layer was accurately determined on the basis of magnification of photograph. The thickness of the hard coat layer is defined by "the average vertical distance between the point at which the particles contained in the hard coat layer are grounded closest to the support and the point free of large size particles on the exposed side (exterior side) having the lowest height".

[Example Samples 2 to 17; Comparative Samples 1 to 3]

Anti-reflection films were prepared in the same manner as in Example Sample 1 except that the crosslinked particle PMMA (MX-300, produced by The Soken Chemical & Engineering Co. , Ltd.; average particle diameter: 3 μm) was used as it was without being subjected to additional air classification or subjected to additional air classification under conditions different from that of Example Sample 1 to have CP values set forth in Tables 1 to 4 and the central line average roughness (Ra) of the anti-reflection film was changed as set forth in Tables 1 to 4. Thus, Example Samples 2 to 17 and Comparative Samples 1 to 3 were prepared.

[Example Sample 18; Comparative Samples 4 to 5]

Anti-reflection films were prepared in the same manner as in Example Sample 1 except that the particle for providing internal scattering properties was replaced by a crosslinked particulate PMMA (MX-150, produced by The Soken Chemical & Engineering Co. , Ltd.; average particle diameter: 1.5 μm) which was then used as it was or subjected to additional air classification under conditions different from that of Example Sample 1 to have CP values set forth in Tables 1 to 4. Thus, Example Sample 18 and Comparative Samples 4 and 5 were prepared.

[Example Samples 19 to 27: Comparative Sample 6]

Anti-reflection films were prepared in the same manner as in Example Sample 1 except that the crosslinked particulate PMMA having an average particle diameter of 3 μm was replaced by a crosslinked particulate PMMA having an average particle diameter of 3.5 μm (SX-350, produced by The Soken Chemical & Engineering Co., Ltd.) which was used as it was or subjected to additional air classification under conditions different from that of Example Sample 1 to have CP values set forth in Tables 1 to 4, the thickness of the hard coat layer was changed to 3.4 μm and the central line average roughness (Ra) of the anti-reflection film was changed as set forth in Tables 1 to 4. Thus, Example Samples 19 to 27 and Comparative Sample 6 were prepared.

[Example Samples 28 to 37]

Anti-reflection films were prepared in the same manner as in Example Sample 10 except that the spread of the particle silica for providing internal scattering properties was changed to change the scattering intensity ratio of transmitted light ($I_{30°}/I_{0°}$) as set forth in Tables 1 to 4. Thus, Example Samples 28 to 37 were prepared.

The results of evaluation of Example Samples 1 to 35 and Comparative Samples 1 to 6 thus prepared are set forth in Tables 1 to 4.

Table 1

| Sample No. | Large size particle | | Contents of hard coat layer | | | |
|---|---|---|---|---|---|---|
| | Degree of additional classification | Cut point (CV value) of coarse particles (μm) | Particle for providing internal scattering properties | | Thickness of hard coat layer (D) | Relationship between cut point (CP value) of particle contained in hard coat layer and thickness (D) |
| | | | Degree of additional classification | Cut point (CV value) of coarse particles (μm) | | |
| Comparative Sample 1 | None | 20 | None | 2.4 | 2.9 | CP value>4D |
| Comparative Sample 2 | Small-scaled | 15 | " | " | " | " |
| Comparative Sample 3 | " | 12 | " | " | " | " |
| Example Sample 1 | " | 11 | " | " | " | 3D<CP value<4D |
| Example Sample 2 | " | 11 | " | " | " | " |
| Example Sample 3 | " | 11 | " | " | " | " |
| Example Sample 4 | " | 11 | " | " | " | " |
| Example Sample 5 | " | 11 | " | " | " | " |
| Example Sample 6 | " | 9 | " | " | " | " |
| Example Sample 7 | " | 9 | " | " | " | " |
| Example Sample 8 | " | 9 | " | " | " | " |
| Example Sample 9 | " | 8 | " | " | " | |
| Example Sample 10 | " | 8 | " | " | " | " |
| Example Sample 11 | " | 8 | " | " | " | " |
| Example Sample 12 | " | 6.5 | " | " | " | " |
| Example Sample 13 | " | 6.5 | " | " | " | " |
| Example Sample 14 | " | 6.5 | " | " | " | " |
| Example Sample 15 | " | 5 | " | " | " | CP value>2D |

(continued)

| Sample No. | Large size particle | | Contents of hard coat layer | | | |
|---|---|---|---|---|---|---|
| | Degree of additional classification | Cut point (CV value) of coarse particles (μm) | Particle for providing internal scattering properties | | Thickness of hard coat layer (D) | Relationship between cut point (CP value) of particle contained in hard coat layer and thickness (D) |
| | | | Degree of additional classification | Cut point (CV value) of coarse particles (μm) | | |
| Example Sample 16 | " | 5 | " | " | " | " |
| Example Sample 17 | Large-scaled | 5 | " | " | " | " |
| Comparative sample 4 | Same as Example Sample 1 | 11 | None | 16 | " | CP value>4D |
| Comparative Sample 5 | " | 11 | Small | 12 | " | " |
| Example Sample 18 | " | 11 | Proceeds further | 10 | " | 3D<CP value<4D |

Table 2

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/ blurred letters | $I_{30°}/I_0°$ (% ratio of scattered light intensity) | Surface roughness Ra (μm) | Transmission image sharpness (%) |
| Comparative Sample 1 | P | G | Good/no blurred letters | 0.07 | 0.15 | 41 |
| Comparative Sample 2 | P | " | " | " | " | 40 |
| Comparative Sample 3 | P | " | " | " | " | 42 |
| Example Sample 1 | G | " | " | " | " | 40 |
| Example Sample 2 | G | " | " | " | 0.11 | 57 |
| Example Sample 3 | F | E | " | " | 0.10 | 60 |
| Example Sample 4 | F | " | " | " | 0.07 | 85 |

(continued)

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/ blurred letters | $I_{30°}/I_{0°}$ (% ratio of scattered light intensity) | Surface roughness Ra (μm) | Transmission image sharpness (%) |
| Example Sample 5 | F | F | " | " | 0.03 | 90 |
| Example Sample 6 | F | E | " | " | 0.10 | 62 |
| Example Sample 7 | F | " | " | " | 0.07 | 86 |
| Example Sample 8 | F | F | " | " | 0.03 | 88 |
| Example Sample 9 | G | E | " | " | 0.10 | 61 |
| Example Sample | G | " | " | " | 0.07 | 84 |
| Example Sample 11 | G | F | " | " | 0.03 | 87 |
| Example Sample | G | E | " | " | 0.10 | 63 |
| Example Sample 13 | G | " | " | " | 0.07 | 94 |
| Example Sample 14 | G | F | " | " | 0.03 | 89 |
| Example Sample 15 | E | E | " | " | 0.10 | 60 |
| Example Sample 16 | E | " | " | " | 0.07 | 83 |
| Example Sample 17 | E | F | " | " | 0.03 | 88 |
| Comparative Sample 4 | P | G | Good/no blurred letters | 0.08 | 0.15 | 42 |
| Comparative Sample 5 | P | " | " | " | " | 43 |
| Example Sample 18 | G | " | " | " | " | 43 |

Table 3

| Sample No. | Large size particle | | Contents of hard coat layer | | | |
|---|---|---|---|---|---|---|
| | Degree of additional classification | Cut point (CV value) of coarse particles (μm) | Particle for providing internal scattering properties | | Thickness of hard coat layer (D) | Relationship between cut point (CP value) of particle contained in hard coat layer and thickness (D) |
| | | | Degree of additional classification | Cut point (CV value) of coarse particles (μm) | | |
| Comparative Sample 6 | None | 21 | None | 2.4 | 3.4 | CP value>4D |
| Comparative Sample 19 | Small-scaled | 13 | " | " | " | 3D < CP value < 4D |
| Comparative Sample 20 | " | 13 | " | " | " | " |
| Example Sample 21 | " | 13 | " | " | " | " |
| Example Sample 22. | " | 9.5 | " | " | " | 2D < CP value < 3D |
| Example Sample 23 | " | 9.5 | " | " | " | " |
| Example Sample 24 | " | 9.5 | " | " | " | " |
| Example Sample 25 | " | 6 | " | " | " | CP value < 2D |
| Example Sample 26 | " | 6 | " | " | " | " |
| Example Sample 27 | " | 6 | " | " | " | " |
| (Example Sample 10) | Same to Example Sample 10 | (8) | None | (2.4) | (2.9) | (2D < CP value<3D) |
| Example Sample 28 | " | " | " | " | " | " |
| Example Sample 29 | " | " | " | " | " | " |
| Example Sample 30 | " | " | " | " | " | " |
| Example Sample 31 | " | " | " | " | " | " |
| Example Sample 32 | " | " | " | " | " | " |
| Example Sample 33 | " | " | " | " | " | " |
| Example Sample 34 | " | " | " | " | " | " |

(continued)

| Sample No. | Large size particle | | Contents of hard coat layer | | | |
|---|---|---|---|---|---|---|
| | Degree of additional classification | Cut point (CV value) of coarse particles (μm) | Particle for providing internal scattering properties | | Thickness of hard coat layer (D) | Relationship between cut point (CP value) of particle contained in hard coat layer and thickness (D) |
| | | | Degree of additional classification | Cut point (CV value) of coarse particles (μm) | | |
| Example Sample 35 | " | " | " | " | " | " |
| Example Sample 36 | " | " | " | " | " | " |
| Example Sample 37 | " | " | " | " | " | " |

Table 4

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/blurred letters | $I_{30°}/I_{0°}$ (% ratio of scattered light intensity) | Surface roughness Ra (μm) | Transmission image sharpness (%) |
| Comparative Sample 6 | P | E | Good/no blurred letters | 0.07 | 0.10 | 60 |
| Example Sample 19 | F | " | " | " | 0.10 | 62 |
| Example Sample 20 | F | " | " | " | 0.06 | 85 |
| Example Sample 21 | F | F | " | " | 0.03 | 89 |
| Example Sample 22 | G | E | " | " | 0.10 | 61 |
| Example Sample 23 | G | " | " | " | 0.06 | 86 |
| Example Sample 24 | G | F | " | " | 0.03 | 87 |
| Example Sample 25 | E | E | " | " | 0.10 | 63 |
| Example Sample 26 | E | " | " | " | 0.06 | 85 |

(continued)

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/blurred letters | $I_{30°}/I_{0°}$ (% ratio of scattered light intensity) | Surface roughness Ra (μm) | Transmission image sharpness (%) |
| Example Sample 27 | E | F | " | " | 0.03 | 86 |
| (Example Sample 10) | (G) | (E) | (Good/no blurred letters) | (0.07) | (0.07) | (84) |
| Example Sample 28 | " | " | Good/no blurred letters | 0.10 | " | 82 |
| Example Sample 29 | " | " | Good/some romaining but practically acceptable blurred letters | 0.11 | " | 82 |
| Example Sample 30 | " | " | " | 0.15 | " | 84 |
| Example Sample 31 | " | " | good/ recognizable but sufficiently tolerable blurred letters | 0.16 | " | 84 |
| Example Sample 32 | " | " | " | 0.19 | " | 85 |
| Example Sample 33 | " | " | Good/blurred letters within the upper limit of tolerance | 0.20 | " | 86 |
| Example Sample 34 | " | " | Good/no blurred letters | 0.03 | " | 78 |

(continued)

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/blurred letters | $I_{30°}/I_0°$ (% ratio of scattered light intensity) | Surface roughness Ra (μm) | Transmission image sharpness (%) |
| Example Sample 35 | " | " | Slightly deteriorated but practically acceptable effect/no blurred letters | 0.02 | " | 76 |
| Example Sample 36 | " | " | Effect within the lower limit/no blurred letters | 0.01 | " | 76 |
| Example Sample 37 | " | " | No effect/no blurred letters | 0.005 | " | 75 |

As can be seen in Tables 1 to 4, when the cut point value (CP value) of various coarse particles in at least one particle contained in the hard coat layer in an anti-reflection film comprising at least one hard coat layer and an outermost low refractive index layer provided on a transparent support are all less than four times the thickness of the hard coat layer, a sufficient defect-freeness can be secured, making it possible to drastically raise the product yield. Further, a polarizing plate and a display device comprising such an anti-reflection film can be provided with a good productivity.

It is further made obvious that when the central line average roughness (Ra) and the transmission image sharpness are predetermined to be not greater than 0.15 μm and from 40% to 97%, preferably not greater than 0.1 μm and from 60% to 95%, respectively, an antiglareness anti-reflection film which exhibits an excellent viewability and good tone and density of black image and undergoes no whitening under outdoor daylight can be produced with a high product yield.

It can be seen in the results of Tables 1 to 4 that CP value is preferably from greater than 3 to less than 4D, more preferably from greater than 2 to less than 3D, even more preferably less than 2D.

[Example 10-A]

A PVA film was dipped in an aqueous solution of 2.0 g/l of iodine and 4.0 g/l of potassium iodide at 25°C for 240 seconds, dipped in an aqueous solution of 10 g/l of boric acid at 25°C for 60 seconds, and then introduced into a tenter stretcher having a configuration as shown in Fig. 2 of JP-A-2002-86554 having a tenter bent as shown in Fig. 2 where it was then stretched by a factor of 5.3 and kept at a constant width. The film was dried in a 80°C atmosphere, and then released from the tenter. The difference in conveyance speed between the tenter clip provided at the both crosswise ends was less than 0.05%. The angle between the central line of the film introduced into the tenter stretcher and the central line of the film fed into the subsequent step was 46°. |L1 - L2| was 0.7 m. W was 0.7 m. Thus, |L1 - L2| was W. The substantial stretching direction Ax - Cx at the exit of the tenter was oblique to the central line of the film fed into the subsequent step at an angle of 45°. No wrinkles and film deformation were observed at the exit of the tenter.

The PVA film thus processed was laminated on a saponified Fujitac film (produced by Fuji Photo Film Co. , Ltd.; cellulose triacetate; retardation value: 3.0 nm) with a 3% aqueous solution of PVA (PVA-117H, produced by KURARAY CO., LTD.) as an adhesive, and then dried at 80°C to obtain a polarizing plate having an effective width of 650

mm. The absorption axis of the polarizing plate thus obtained was oblique to the longitudinal direction at an angle of 45°. The polarizing plate exhibited a percent transmission of 43.7% at 550 nm and a percent polarization of 99.97 %. When the polarizing plate was cut into a size of 310 mm x 233 mm as shown in Fig. 2, a polarizing plate having an area efficiency of 91.5% and an absorption axis oblique to a side of the rectangle at an angle of 45°.

Subsequently, Example Sample 10 (saponified) was laminated on the aforementioned polarizing plate to prepare a polarizing plate with an anti-reflection film. A liquid crystal display device was then prepared from this polarizing plate with the anti-reflection layer thereof disposed on the outermost layer. The liquid crystal display device thus prepared gave no reflection of outdoor daylight and thus exhibited an excellent contrast. Because of its antiglareness, this liquid crystal display device gave no outstanding reflected image and hence an excellent viewability.

[Example 10-B]

As each of the protective film on the liquid crystal cell side of the polarizing plate on the viewing side of the transmission type TN liquid crystal cell having Example Sample 10 stuck thereto as described in (4) "Evaluation of antiglareness" and the protective film on the liquid crystal cell side of the polarizing plate on the back light side of the transmission type TN liquid crystal cell there was used a Type SA-12B wide view film (produced by Fuji Photo Film Co., Ltd.) having a discotic structure unit, in which the disc plaine is inclined to the plaine of the surface protective film, wherein the angle between the plaine af the disc of the discotic structure unit and the plain of the surface protective film is changed in the direction of depth of the optically anisotropic layer. As a result, a 23 inch television liquid crystal display device having an extremely wide horizontal and vertical viewing angle, an extremely excellent viewability and a high display quality can be obtained. As can be seen in the results of the use of Example Samples 10 and 28 to 37 in Table 1, when the ratio ($I_{30°}/I_{0}°$) of the intensity of scattered light at an emission angle of 30° to at an emission angle of 0° is predetermined to be from 0.01% to 0.20%, preferably from 0.02% to 0.15%, more preferably from 0.03% to 0.1%, an anti-reflection film which causes no occurrence of blurred letters and exerts an effect of enhancing the viewing angle of liquid crystal display can be produced free from point defects. These anti-reflection films were quite similarly mounted on a liquid crystal wide television set having an aspect ratio of 9 : 16. Thus, the effect of enhancing the viewing angle was confirmed. As a result, an excellent effect was similarly exerted. Accordingly, it was demonstrated that these example samples each are an anti-reflection film which has no dependence on viewing angle and is effective particularly for large size liquid crystal television set and liquid crystal wide television set.

[Example 10-C]

Example Sample 10 was laminated on the surface glass plate of an organic EL display device with an adhesive. As a result, a display device having little reflection on the surface of glass plate and a high viewability was obtained.

[Example 10-D]

Using Example Sample 10, a polarizing plate having an anti-reflection film provided on one side thereof was prepared. A λ/4 plate was then laminated on the polarizing plate on the side thereof opposite the anti-reflection film side. The polarizing plate was then laminated on an organic EL display device on the surface glassplate thereof. As a result, a display device having no surface reflection and no reflection from the interior of the surface glass plate and an extremely high viewability was obtained.

80, 000 parts by weight of the hard coat layer intermediate solution (1) in Example Sample 1 which had been subjected to circulatory filtration were transferred into a preparation tank. To the solution were then added 6,450 parts by weight of a dispersion obtained by subjecting a particulate crosslinked PMMA having an average particle diameter of 3 μm (MX-300; refractive index: 1.49, produced by The Soken Chemical & Engineering Co., Ltd. ) to additional classification using an air classifier such that it has a particle size distribution as shown in Table 1 ($d_{Max} - d_{AC} \leq 7$ μm) to remove coarse particles (the average particle diameter remained almost the same as before classification), and then dispersing the particulate material with methyl isobutyl ketone as a dispersing medium at 10,000 rpm using a polytron dispersing machine for 40 minutes such that the solid content in the dispersion reached 25%. The mixture was then stirred. To the mixture were then added 8,500 parts by weight of methyl isobutyl ketone. The mixture was then thoroughly stirred to complete a hard coat layer coating solution A. The solution thus prepared was spread, and then cured by irradiation with ultraviolet rays to obtain a coat layer having a refractive index of 1.62. During the spreading of the solution A, the solution A was subjected to circulatory filtration through a profile filter having a pore diameter of 10 μm produced by Pall Corporation. Thus, a hard coat layer was formed.

[Preparation of Example sample 101]

(1) Provision of hard coat layer

Using a microgravure roll having a diameter of 50 mm and a gravure pattern of 135 lines per inch and a depth of 40 μm and a doctor blade, the aforementioned hard coat layer coating solution A was spread over a triacetyl cellulose film having a thickness of 80 μm (TAC-TD80UL, produced by Fuji Photo Film Co., Ltd.) which was being wound off the roll at a gravure roll rotary speed of 30 rpm and a conveyance speed of 10 m/min, dried at 60°C for 150 seconds, and then irradiated with ultraviolet rays from a 160 W/cm air-cooled metal halide lamp (produced by EYEGRAPHICS CO., LTD.) at an illuminance of 400 mW/cm2 and a dose of 300 mJ/cm2 in an atmosphere purged with nitrogen so that the coat layer was cured to form a hard coat layer to a thickness of 2.9 μm. The coated film was then wound.

(2) Provision of low refractive index layer

Using a microgravure roll having a diameter of 50 mm and a gravure pattern of 200 lines per inch and a depth of 40 μm and a doctor blade, the aforementioned low refractive index layer coating solution A was spread over the triacetyl cellulose film thus provided with a hard coat layer which was being wound off the roll at a gravure roll rotary speed of 30 rpm and a conveyance speed of 15 m/min, dried at 120°C for 150 seconds and then at 140°C for 8 minutes, and then irradiated with ultraviolet rays from a 290 W/cm air-cooled metal halide lamp (produced by EYEGRAPHICS CO., LTD.) at an illuminance of 400 mW/cm2 and a dose of 600 mJ/cm2 in an atmosphere purged with nitrogen to form a low refractive index layer to a thickness of 100 nm. The coated film was then wound.

(3) Saponification of anti-reflection film

After film formation, the aforementioned sample 101 was then subjected to the following treatment.
A 1.5 N aqueous solution of sodium hydroxide was prepared and kept at 55°C. A 0.01 N diluted aqueous solution of sulfuric acid was prepared. The anti-reflection film thus prepared was dipped in the aforementioned aqueous solution of sodium hydroxide for 2 minutes, and then dipped in water so that the aqueous solution of sodium hydroxide was thoroughly washed away. Subsequently, the anti-reflection film was dipped in the aforementioned dilute aqueous solution of sulfuric acid for 1 minute, and then dipped in water so that the dilute aqueous solution of sulfuric acid was thoroughly washed away. Finally, the sample was thoroughly dried at 120°C.
Thus, a saponified anti-reflection film was prepared as Example Sample 1.

(Evaluation of anti-reflection film)

The anti-reflection film thus obtained was then evaluated for the following properties.

(1) The measurement of scattered light profile was conducted in the manner as mentioned above.
(2) Measurement of average diameter and maximum diameter of particles
A dispersion of particles to be measured for particle size distribution was prepared for each of the various particulate materials using IPA (isopropyl alcohol) as a dispersant . For the measurement of average particle diameter and maximum particle diameter, a Type FPIA-2100 flow particle image analyzer (produced by Sysmex Corporation) was used (IPA was used also as a flow solution during measurement). The number of particles to be measured was million. From the measurements were then determined the average particle diameter and maximum particle diameter. Referring to the standard formulation of the dispersion, 0.05 of the particulate material was supersonically dispersed in 40 g of IPA with a particle dispersing surface active agent.
(3) The measurement of transmitted image sharpness was conducted in the same manner as mentioned above.
(4) Evaluation of antiglareness

The triacetyl cellulose film having a thickness of 80 μm which had been dipped in a 1.5 N 55°C aqueous solution of NaOH for 2 minutes, neutralized, and then rinsed (TAC-TD80U, produced by Fuji Photo Film Co., Ltd.) and the triacetyl cellulose film saponified on the back surface thereof as Example Sample 101 were bonded to the respective side of a polarizer prepared by stretching a polyvinyl alcohol to which iodine had been adsorbed so that the polarizer was protected to prepare a polarizing plate. The polarizing plate thus prepared was mounted on a 23 inch liquid crystal television set (having a Type D-BEF polarizing separation film having a polarizing selection layer (produced by Sumitomo 3M) provided interposed between the back light and the liquid crystal cell) having a transmission type TN liquid crystal display device incorporated therein to replace the viewing side polarizing plate in such an arrangement that the anti-reflection film was disposed on the outermost surface. A black image was then displayed on the screen. The antiglareness of the screen

was then evaluated under indoor fluorescent lamp according to the following criterion.

1) Too low an antiglareness and much reflection of fluorescent lamp: P (poor)
2) High antiglareness that causes the initiation of deterioration of black image tone and density: F (fair)
3) Low antiglareness: F (fair)
4) Proper antiglareness and good viewability: G (good)
5) Proper antiglareness, good viewability and extremely excellent black image tone and density: E (excellent)

(5) Confirmation of the presence or absence of the effect of improving the viewing angle and the presence or absence of blurred letters

A polarizing plate prepared from the anti-reflection film thus prepared as in Example 101-B described later was mounted on a 23 inch liquid crystal TV set. The presence or absence of the effect of improving the viewing angle and the presence or absence of blurred letters were visually confirmed. For the criterion of evaluation, comparison was made with a polarizing plate prepared in the same manner as described above except that a Type CVFILMCV L 01A antiglareness anti-reflection film (produced by Fuji Photo Film Co., Ltd.). The antiglareness anti-reflection film was similarly mounted on the 23 inch liquid crystal TV set. The Type CV FILM CV L 01A antiglareness anti-reflection film leaves something to be desired in the range of viewing angle within which no inversion gradation occurs.

(6) The measurement of central line average roughness (Ra) was conducted in the same manner as mentioned above.
(7) Examination of point defects/measurement of coarse particles causing point defects

A 1 m x 1 m anti-re flection film terminal sampled at random was examined for point defects under a transmission light source. Bright points having a size of not smaller than 50 μm detectable by ordinary users' eyes were then marked as point defects. Thereafter, the portions thus marked were each photographed under an optical microscope. On the photograph, the number of coarse particles contained in the hard coat layer was then counted as point defects. This examination was conducted on 100 sheets of 1 m x 1 m terminals sampled at random. The total number of point defects thus counted was then divided by 100 to determine the average number of point defects per $m^2$. Taking into account the product yield, the average number of point defects needs to be not greater than 1 point/$m^2$, preferably not greater than 0.3 points/$m^2$, more preferably not greater than 0.1 points/$m^2$, most preferably 0 point/$m^2$ (not higher than detectability).

[Example Samples 102 to 107; Comparative Samples 101 and 102]

Anti-reflection films were prepared in the same manner as in Example Sample 101 except that the crosslinked particulate PMMA (MX-300, produced by The Soken Chemical & Engineering Co . , Ltd. ; average particle diameter: 3 μm) was used as it was without being subjected to additional air classification or subjected to additional air classification under conditions different from that of Example Sample 101 to have a particle size distribution set forth in Table 1. Thus, Example Samples 102 to 107 and Comparative Samples 101 and 102 were prepared.

[Example Samples 108 to 114]

Anti-reflection films were prepared in the same manner as in Example Sample 102 except that the particulate material for providing internal scattering properties was replaced by a crosslinked particulate PMMA (MX-150, produced by The Soken Chemical & Engineering Co., Ltd.; average particle diameter: 1.5 μm) which was then used as it was or subjected to additional air classification under conditions different from that of Example Sample 102 to have a particle size distribution set for thin Table 5. Thus, Example Samples 108 to 114 were prepared.

[Example Samples 115 to 121: Comparative Samples 103 and 104]

Anti-reflection films were prepared in the same manner as in Example Sample 101 except that the crosslinked particulate PMMA having an average particle diameter of 3 μm was replaced by a crosslinked particulate PMMA having an average particle diameter of 5 μm (MX-350; average particle diameter: 5 μm; produced by The Soken Chemical & Engineering Co., Ltd.) which was used as it was or subjected to additional air classification under conditions different from that of Example Sample 101 to have a particle size distribution set forth in Table 5 and the thickness of the hard coat layer was changed to 4.9 μm. Thus, Example Samples 115 to 121 and Comparative Samples 103 and 104 were prepared.

[Example Samples 122 to 130]

Anti-reflection films were prepared in the same manner as in Example Sample 102 except that the spread of the particulate silica for providing internal scattering properties was changed to change the scattering intensity ratio of transmitted light ($I_{30°}/I_0°$) as set forth in Table 1. Thus, Example Samples 122 to 130 were prepared.

[Example Samples 131 to 135; Comparative Samples 105 and 106]

Anti-reflection films were prepared in the same manner as in Example Sample 102 except that the thickness of the hard coat layer was precisely adjusted (reduction of thickness, increase of thickness) to have a central line average roughness (Ra) and a transmitted image sharpness set forth in Table 5. Thus, Example Samples 131 to 135 and Comparative Samples 105 and 106 were prepared.

The results of evaluation of Example Samples 101 to 135 and Comparative Samples 101 to 106 thus prepared are set forth in Tables 5 to 8.

Table 5

| Sample No. | Contents of hard coat layer | | | | | | | |
|---|---|---|---|---|---|---|---|---|
| | Large size particulate material | | | | Particulate material providing internal scattering properties | | | |
| | Degree of additional classification | $d_{AV}$(μm) (average particle diameter) | $d_{MAX}$ (μm) (maximum particle diameter) | Range of particle size distributi on ($d_{MAX}$- $d_{AV}$) | Degree of additional classification | $d_{AV}$(μm) (average particle diameter) | $d_{MAX}$ (μm) (maximum particle diameter) | Range of particle size distribution ($d_{MAX}$ $d_{AV}$) |
| Comparative Sample 101 | None | Crosslinked PMMA 3 | 15.0 | $d_{MAX}$- $d_{AV}$ >7 μm | None | Silica 1.5 | 2.0 | $d_{MAX}$- $d_{AV}$ ≤ 1 μm |
| Comparative Sample 102 | Small | " | 11.0 | $d_{MAX}$- $d_{AV}$ >7 μm | " | " | " | " |
| Example Sample 101 | ↑ | " | 10.0 | $d_{MAX}$- $d_{AV}$≤ Sample 101 | 7 " | " | " | " |
| Example Sample 102 | \| | " | 8.3 | $d_{MAX}$- $d_{AV}$ ≤ μm | 7 " | " | " | " |
| Example Sample 103 | \| | " | 7.8 | $d_{MAX}$- $d_{AV}$ ≤ 5 μm | " | " | " | " |
| Example Sample 104 | \| | " | 6.2 2 | $d_{MAX}$ $d_{AV}$ ≤5 μm | " | " | " | " |
| Example Sample 105 | I | " | 5. 7 | $d_{MAX}$ - $d_{AV}$ ≤ 3 μm | " | " | " | " |
| Example Sample 106 | ↓ | " | 4.3 | $d_{MAX}$ - $d_{AV}$ ≤ 3 μm | " | " | " | " |
| Example Sample 107 | Great | " | 3.9 | $d_{MAX}$ - $d_{AV}$ < $d_{MAX}$ - $d_{AV}$≤ 1 μm | " | " | " | " |
| Example Sample 108 | Same as Example Sample 2 | " | 8.3 | $d_{MAX}$-$d_{AV}$≤7 7 μm | Small | Crosslinked PMMA 1.5 | 4.3 | $d_{MAX}$-$d_{AV}$≤ 7 μm |
| Example Sample 109 | " | " | " | " | ↑ | " | 3.2 | $d_{MAX}$- $d_{AV}$ ≤ μm |

(continued)

| Sample No. | Contents of hard coat layer | | | | | | | |
|---|---|---|---|---|---|---|---|---|
| | Large size particulate material | | | | Particulate material providing internal scattering properties | | | |
| | Degree of additional classification | $d_{AV}$(µm) (average particle diameter) | $d_{MAX}$ (µm) (maximum particle diameter) | Range of particle size distributi on ($d_{MAX}$- $d_{AV}$) | Degree of additional classification | $d_{AV}$(µm) (average particle diameter) | $d_{MAX}$ (µm) (maximum particle diameter) | Range of particle size distribution ($d_{MAX}$ $d_{AV}$) |
| Example Sample 110 | " | " | " | " | I | " | 2.9 | $d_{MAX} - d_{AV} \leq 5$ µm |
| Example Sample 111 | " | " | " | " | I | " | 2.4 | $d_{MAX}- d_{AV} \leq 5$ µm |
| Example Sample 112 | " | " | " | " | I | " | 2.1 | $d_{MAX}- d_{AV} \leq 3$ µm |
| Example Sample 113 | " | " | " | " | ↓ | " | 1.6 | $d_{MAX} - d_{AV} \leq 3$ µm |
| Example Sample 114 | " | " | " | " | Great | " | 1.4 | $d_{MAx} - d_{AV} \leq 1$ µm |
| Comparative Sample 103 | None | Crosslinked PMMA 5 | 20.0 | $d_{MAX} - d_{AV} > 7$ µm | None | Silica 1.5 | 2.0 | $d_{MAX} - d_{AV} \leq 1$ $d_{MAX} - d_{AV}$ µm |
| Comparative Sample 104 | Small | " | 12.4 | $d_{MAX}- d_{AV}>7$ µm | " | " | " | " |
| Example Sample 115 | ↑ | " | 11.8 | $d_{MAX}- d_{AV} \leq 7$ µm | " | " | " | " |
| Example Sample 116 | \| | " | 10.3 | $d_{MAX}- d_{AV} \leq 7$ | " | " | " | " |
| Example Sample 117 | \| | " | 9.7 | $d_{MAX}- d_{AV} \leq 5$ µm | " | " | " | " |
| Example Sample 118 | \| | " | 8.2 | $d_{MAX} - d_{AV} \leq$ µm | 5 | " | " | " |
| Example Sample 119 | \| | " | 7.8 | $d_{MAX} - d_{AV} \leq 3$ µm | " | " | " | " |

(continued)

| Sample No. | Contents of hard coat layer | | | | | | | |
|---|---|---|---|---|---|---|---|---|
| | Large size particulate material | | | | Particulate material providing internal scattering properties | | | |
| | Degree of additional classification | $d_{AV}$(μm) (average particle diameter) | $d_{MAX}$ (μm) (maximum particle diameter) | Range of particle size distributi on ($d_{MAX}$- $d_{AV}$) | Degree of additional classification | $d_{AV}$(μm) (average particle diameter) | $d_{MAX}$ (μm) (maximum particle diameter) | Range of particle size distribution ($d_{MAX}$ $d_{AV}$) |
| Example Sample 120 | ↓ | " | 6.4 | $d_{MAX}$ - $d_{AV} \leq 3$ μm | " | " | " | " |
| Example Sample 121 | Great | " | 5.9 | $d_{MAX}$- $d_{AV} \leq$ μm | 1 " | " | " | " |

Table 6

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/ blurred letters | $I_{30°}/I_{0}°$ (% ratio of scattered light intensity) | Surface roughness Ra (μm) | Transmitted image sharpness (%) |
| Comparative Sample 101 | Many (NG) | E | Good/no blurred letters | 0.07 | 0.08 | 80 |
| Comparative Sample 102 | 11 (NG) | " | " | " | " | " |
| Example Sample 101 | 0.8 | " | " | " | " | " |
| Example Sample 102 | 0.7 | " | " | " | " | " |
| Example Sample 103 | 0.3 | " | " | " | " | " |
| Example Sample 104 | 0.2 | " | " | " | " | " |
| Example Sample 105 | 0.1 | " | " | " | " | " |
| Example Sample 106 | 0.06 | " | " | " | " | " |
| Example Sample 107 | 0 | " | " | " | " | " |
| Example Sample 108 | 1.0 | E | Good/no blurred letters | 0.08 | 0.08 | 83 |
| Example Sample 109 | 1.0 | " | " | " | " | " |
| Example Sample 110 | 0.8 | " | " | " | " | " |
| Example Sample 111 | 0.8 | " | " | " | " | " |
| Example Sample 112 | 0.7 | " | " | " | " | " |
| Example Sample 113 | 0.7 | " | " | " | " | " |
| Example Sample 114 | 0.6 | " | " | " | " | " |
| Comparative Sample 103 | Many (NG) | E | Good/no blurred letters | 0.06 | 0.08 | 78 |

(continued)

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/ blurred letters | $I_{30°}/I_{0}°$ (% ratio of scattered light intensity) | Surface roughness Ra (μm) | Transmitted image sharpness (%) |
| comparative Sample 104 | 20 (NG) | " | " | " | " | " |
| Example Sample 115 | 0.9 | " | " | " | " | " |
| Example Sample 117 | 0.3 | " | Good/no blurred letters | " | " | " |
| Example Sample 118 | 0.2 | " | " | " | " | " |
| Example Sample 119 | 0.1 | " | " | " | " | " |
| Example Sample 120 | 0.07 | " | | " | " | " |
| Example Sample 121 | 0 | " | | " | " | " |

Table 7

| Sample No. | Contents of hard coat layer | | | | | | | |
|---|---|---|---|---|---|---|---|---|
| | Large size particulate material | | | | Particulate material providing internal scattering properties | | | |
| | Degree of additional classification | $d_{AV}$(µm) (average particle diameter) | $d_{MAX}$ (µm) (maximum particle diameter) | Range of particle size distribution ($d_{MAX}$ - $d_{AV}$) | Degree of additional classification | $d_{AV}$ (µm) (average particle diameter) | $d_{MAX}$ (µm) (maximum particle diameter) | Range of particle size distribution ($d_{MAX}$ - $d_{AV}$) |
| (Example Sample 102) | (Same as Example Sample 2) | Crosslinked PMMA 3 | (8.3) | ($d_{MAX}$-$d_{AV}$≤7 µm) | (None) | (Silica 1.5) | (2.0) | ($d_{MAX}$-$d_{AV}$≤ 1 µm) |
| Example Sample 121 | " | " | " | " | " | " | " | " |
| Example Sample 122 | " | " | " | " | " | " | " | " |
| Example Sample 123 | " | " | " | " | " | " | " | " |
| Example Sample 124 | " | " | " | " | " | " | " | " |
| Example Sample 125 | " | " | " | " | " | " | " | " |
| Example Sample 126 | " | " | " | " | " | " | " | " |
| Example Sample 127 | " | " | " | " | " | " | " | " |
| Example Sample 128 | " | " | " | " | " | " | " | " |
| Example Sample 129 | " | " | " | " | " | " | " | " |
| Example Sample 130 | " | " | " | " | " | " | " | " |
| | | | | | | | | |

(continued)

| Sample No. | Contents of hard coat layer | | | | | | | |
|---|---|---|---|---|---|---|---|---|
| | Large size particulate material | | | | Particulate material providing internal scattering properties | | | |
| | Degree of additional classification | $d_{AV}$($\mu$m) (average particle diameter) | $d_{MAX}$ ($\mu$m) (maximum particle diameter) | Range of particle size distribution ($d_{MAX}$ - $d_{AV}$) | Degree of additional classification | $d_{AV}$ ($\mu$m) (average particle diameter) | $d_{MAX}$ ($\mu$m) (maximum particle diameter) | Range of particle size distribution ($d_{MAX}$ - $d_{AV}$) |
| Example Sample 131 | " | " | " | " | " | " | " | " |
| Example Sample 132 | " | " | " | " | " | " | " | " |
| Example Sample 133 | " | " | " | " | " | " | " | " |
| Example Sample 134 | " | " | " | " | " | " | " | " |
| Example Sample 135 | " | " | " | " | " | " | " | " |
| Comparative Sample 105 | " | " | " | " | " | " | " | " |
| Comparative Sample 106 | " | " | " | " | " | " | " | " |

Table 8

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/ blurred letters | $I_{30°}/I_{0°}$ (% ratio of scattered light intensity) | Surface roughness Ra (μm) | Transmission image sharpness (%) |
| (Example Sample 102) | (0.8) | (E) | (Good/no blurred letters) | (0.07) | (0.08) | (80) |
| Example Sample 121 | 0.8 | " | Good/no blurred letters | 0.10 | " | 82 |
| Example Sample 122 | 0.8 | " | Good/some blurred letters left but practically acceptable | 0.11 | " | 82 |
| Example Sample 123 | 0.9 | " | " | 0.15 | " | 84 |
| Example Sample 124 | 0.9 | " | Good/ blurred letters recognized but tolerable | 0.16 | " | 84 |
| Example Sample 125 | 0.9 | " | " | 0.19 | " | 85 |
| Example Sample 126 | 0.9 | " | Good/ blurred letters tolerable below upper limit | 0.20 | " | 86 |
| Example Sample 127 | 0.8 | " | Good/no blurred letters | 0.03 | " | 78 |
| Example Sample 128 | 0.7 | " | Slightly reduced but practically acceptable effect of enhancing viewing angle/no blurred letters | 0.02 | " | 76 |

(continued)

| Sample No. | Results of examination of surface conditions | Results of evaluation of properties | | | | |
|---|---|---|---|---|---|---|
| | Number of point defects attributed to coarse particles (E/G/F/P) | Evaluation of antiglareness | Effect of improving viewing angle/ blurred letters | $I_{30°}/I_{0°}$ (% ratio of scattered light intensity) | Surface roughness Ra (μm) | Transmission image sharpness (%) |
| Example Sample 129 | 0.7 | " | Lower limit of effect of enhancing viewing angle/no blurred letters | 0.01 | " | 76 |
| Example Sample 130 | 0.8 | " | No effect of enhancing viewing angle/no blurred letters | 0.005 | " | 75 |
| Example Sample 131 | 0.8 | F | Good/no blurred 131 letters | 0.07 | 0.03 | 90 |
| Example Sample 132 | 1.0 | P | " | " | 0.02 | 93 |
| Example Sample 133 | 0.8 | E | " | " | 0.10 | 60 |
| Example Sample 134 | 0.8 | G | " | " | 0.11 | 57 |
| Example Sample 135 | 0.7 | G | " | " | 0.15 | 40 |
| Comparative Sample 105 | 0.7 | P | " | " | 0.17 | 36 |
| Comparative Sample 106 | 0.6 | P | " | " | 0.27 | 30 |

As can be seen in Tables 5 to 8, the anti-reflection films wherein one or more large size particulate materials and one or more internal-scattering particulate materials contained in the hard coat layer each satisfy the following relationship (1) can be provided with a sufficient defect-freeness, making it possible to drastically raise the product yield. Further, a polarizing plate and a display device comprising such an anti-reflection film can be provided with a good productivity.

$$0\ \mu m \leq d_{Max} - d_{AC} \leq 7\ \mu m \quad (1)$$

wherein $d_{Max}$ and $d_{Ac}$ are as defined above).

It is also made obvious from Tables 1 to 4 that the particulate materials each preferably satisfy the relationship

0 μm ≤ $d_{Max}$ - $d_{AC}$ ≤ 5 μm, more preferably 0 μm ≤ $d_{Max}$ - $d_{AC}$ ≤ 3 μm, even more preferably 0 μm ≤ $d_{Max}$ - $d_{AC}$≤ 1 μm.

It is further made obvious that when the central line average roughness (Ra) and the transmitted image sharpness are predetermined to be not greater than 0.15 μm and from 40% to 97%, preferably not greater than 0.1 μm and from 60% to 95%, respectively, an antiglareness anti-reflection film which exhibits an excellent viewability and good tone and density of black image and undergoes no whitening under outdoor daylight can be produced with a high product yield. Example Sample 132 left something to be desired in antiglareness but was excellent in elimination of point defects and blurred image and improvement of viewing angle as well as in transmitted image sharpness. These effects remained the same even when the thickness of the hard coat layer was 3 μm, which is the same as the average diameter of the large size particulate material. Comparative Samples 105 and 106 exhibited a central line average roughness (Ra) of greater than 0.15 μm and deteriorated black image tone and density and thus were unacceptable.

[Example 101-A]

A PVA film was dipped in an aqueous solution of 2.0 g/l of iodine and 4.0 g/l of potassium iodide at 25°C for 240 seconds, dipped in an aqueous solution of 10 g/l of boric acid at 25°C for 60 seconds, and then introduced into a tenter stretcher having a configuration as shown in Fig. 2 of JP-A-2002-86554 having a tenter bent as shown in Fig. 2 where it was then stretched by a factor of 5.3 and kept at a constant width. The film was dried in a 80°C atmosphere, and then released from the tenter. The difference in conveyance speed between the tenter clip provided at the both crosswise ends was less than 0.05%. The angle between the central line of the film introduced into the tenter stretcher and the central line of the film fed into the subsequent step was 46°. |L1 - L2| was 0.7 m. W was 0.7 m. Thus, |L1 - L2| was W. The substantial stretching direction Ax - Cx at the exit of the tenter was oblique to the central line of the film fed into the subsequent step at an angle of 45°. No wrinkles and film deformation were observed at the exit of the tenter.

The PVA film thus processed was laminated on a saponified Fujitac film (produced by Fuji Photo Film Co., Ltd.; cellulose triacetate; retardation value: 3.0 nm) with a 3% aqueous solution of PVA (PVA-117H, produced by KURARAY CO., LTD.) as an adhesive, and then dried at 80°C to obtain a polarizing plate having an effective width of 650 mm. The absorption axis of the polarizing plate thus obtained was oblique to the longitudinal direction at an angle of 45°. The polarizing plate exhibited a percent transmission of 43.7% at 550 nm and a percent polarization of 99.97%. When the polarizing plate was cut into a size of 310 mm x 233 mm as shown in Fig. 2, a polarizing plate having an area efficiency of 91.5% and an absorption axis oblique to a side of the rectangle at an angle of 45° was obtained.

Subsequently, Example Sample 101 (saponified) was laminated on the aforementioned polarizing plate to prepare a polarizing plate with an anti-reflection film. A liquid crystal display device was then prepared from this polarizing plate with the anti-reflection layer thereof disposed on the outermost layer. The liquid crystal display device thus prepared gave no reflection of outdoor daylight and thus exhibited an excellent contrast. Because of its antiglareness, this liquid crystal display device gave no outstanding reflected image and hence an excellent viewability.

[Example 101-B]

As each of the protective film on the liquid crystal cell side of the polarizing plate on the viewing side of the transmission type TN liquid crystal cell having Example Sample 101 stuck thereto as described in (4) "Evaluation of antiglareness" and the protective film on the liquid crystal cell side of the polarizing plate on the back light side of the transmission type TN liquid crystal cell there was used a Type SA-12B wide view film (produced by Fuji Photo Film Co., Ltd.) having a discotic structure unit, in which the plaine of the disc of which is inclined to the plaine of the surface protective film, wherein the angle between the plaine of the disc of the discotic structure unit and the plaine of the surface protective film is changed in the direction of depth of the optically anisotropic layer. As a result, a liquid crystal display device having an extremely wide horizontal and vertical viewing angle, an extremely excellent viewability and a high display quality can be obtained. As can be seen in the results of the use of Example Samples 101 and 122 to 130 in Tables 5 to 8, when the ratio ($I_{30°}/I_0°$) of the intensity of scattered light at an emission angle of 30° to at an emission angle of 0° is predetermined to be from 0.01% to 0.20%, preferably from 0.02% to 0.15%, more preferably from 0.03% to 0.1%, an anti-reflection film which causes no occurrence of blurred letters and exerts an effect of enhancing the viewing angle of liquid crystal display can be produced free from point defects.

These anti-reflection films were quite similarly mounted on a liquid crystal wide television set having an aspect ratio of 9 : 16. Thus, the effect of enhancing the viewing angle was confirmed. As a result, an excellent effect was similarly exerted. Accordingly, it was demonstrated that these example samples each are an anti-reflection film which has no dependence on viewing angle and is effective particularly for large size liquid crystal television set and liquid crystal wide television set.

[Example 101-C]

Example Sample 101 was laminated on the surface glass plate of an organic EL display device with an adhesive. As a result, a display device having little reflection on the surface of glass plate and a high viewability was obtained.

[Example 101-D]

Using Example Sample 101, a polarizing plate having an anti-reflection film provided on one side thereof was prepared. A λ/4 plate was then laminated on the polarizing plate on the side thereof opposite the anti-reflection film side. The polarizing plate was then laminated on an organic EL display device on the surface glass plate thereof. As a result, a display device having no surface reflection and no reflection from the interior of the surface glass plate and an extremely high viewability was obtained.

INDUSTRIAL APPLICABILITY

In accordance with the invention, an anti-reflection film secured with a sufficient defect-freeness can be provided.
Further, a display device comprising an anti-reflection film of the invention or a display device comprising a polarizing plate made of an anti-reflection film of the invention exhibits an excellent viewability as well as an extremely wide viewing angle.

**Claims**

1. An anti-reflection film comprising a transparent support, at least one hard coat layer and an outermost low refractive index layer,
wherein (a) the surface of the anti-reflection film has a central line average roughness: Ra of not greater than 0.15 μm, (b) the hardcoat layer comprises at least one Kind of particle, and (c) the at least one kind of particle includes a particle having an average particle diameter of not smaller than 80% of the thickness of the hard coat layer and the particle in the hard coat layer satisfies a relationship represented by the following formula (1) :

$$0\ \mu m \leq d_{Max} - d_{AC} \leq 7\ \mu m \qquad (1)$$

wherein $d_{Max}$ represents the maximum diameter of particles (unit: μm); and $d_{AC}$ represents the average diameter of the particles (unit: μm).

2. The anti-reflection film as defined in Claim 1, wherein the hard coat layer further comprises at least one particle providing an internal scattering property, and the at least one particle providing an internal scattering property has an average particle diameter of less than 80% of the thickness of the hard coat layer and satisfies the relationship represented by the formula as defined in Claim 11.

3. The anti-reflection film as defined in Claim 1 or 2, wherein the at least one hard coat layer includes a light-diffusing layer, and the light-diffusing layer has a scattered light intensity at 30° of 0.01 to 0.2% based on the light intensity at an exit angle of 0° in a scattered light profile measured by a goniophotometer.

4. The anti-reflection film as defined in any one of Claim 1 to 3, wherein the surface of the anti-reflection film has a central line average roughness Ra of not greater than 0.10 μm.

5. The anti-reflection film as defined in any one of Claims. 1 to 4, which has a value of transmitted image sharpness of from not smaller than 40% to less than 97% as measured at a comb width of 0.5 mm.

6. A polarizing plate comprising a polarizer and two protective films of the polarizer, wherein one of the two protective films of the polarizer is the anti-reflection film described in any one of claims 1 to 5.

7. The polarizing plate as defined in Claim 6, wherein the protective film other than the anti-reflection film of the two protective films of a polarizer is an optical compensation film having an optical compensation layer comprising an optically anisotropic layer, and

the optically anisotropic layer is a layer having a negative birefringence and comprising a compound having a discotic structure unit, the discplane of the discotic structure unit is inclined with respect to the surface protective film plane and the angle between the disc plane of the discotic structure unit and the surface protective film plane is changed in the direction of depth of the optically anisotropic layer.

**8.** A liquid crystal display device comprising the anti-reflection film defined in any one of Claims 1 to 5, or the polarizing plate defined in Claim 6 or 7 as an outermost layer of the display device.

**9.** The liquid crystal display device as defined in Claim 8, which is one of a liquid crystal large-sized television having a size of not smaller than 21 inch and a liquid crystal wide television having an aspect ratio of 9 : 16 or greater.

**10.** A liquid crystal display device of a TN-, STN-, VA-, IPS- or OCB-mode transmission, reflection or semi-transmission type, comprising at least one of anti-reflection film defined in any one of Claims - 1 to 5 or a polarizing plate defined in Claim 6 or 7.

FIG. 1

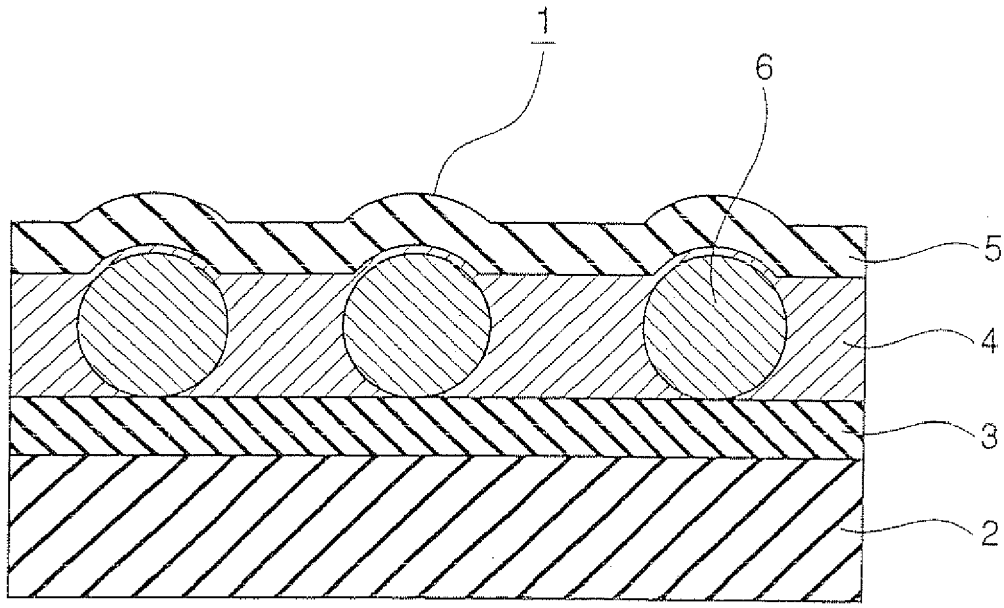

European Patent Office

# EUROPEAN SEARCH REPORT

Application Number
EP 08 16 1064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 281410 A (FUJI PHOTO FILM CO LTD) 10 October 2001 (2001-10-10) * abstract; figure * * paragraph [0021] - paragraph [0024] * ----- | 1-10 | INV. G02B1/11 G02B5/02 B32B7/02 |
| A | US 2002/034013 A1 (NAKAMURA KAZUHIRO [JP] ET AL) 21 March 2002 (2002-03-21) * abstract; figures * * paragraph [0099] * * paragraph [0116] - paragraph [0117] * ----- | 1-10 | |
| A | WO 02/075373 A (FUJI PHOTO FILM CO LTD [JP]; IKEYAMA AKIHIRO [JP]) 26 September 2002 (2002-09-26) & US 2004/156110 A1 (IKEYAMA AKIHIRO [JP]) 12 August 2004 (2004-08-12) * paragraph [0123] - paragraph [0129] * * figures * ----- | 1-10 | |

TECHNICAL FIELDS SEARCHED (IPC)
G02B
G02F

The present search report has been drawn up for all claims

| Place of search | Date of completion of the search | Examiner |
|---|---|---|
| Munich | 28 August 2008 | Ward, Seamus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

3

EPO FORM 1503 03.82 (P04C01)

## ANNEX TO THE EUROPEAN SEARCH REPORT ON EUROPEAN PATENT APPLICATION NO. EP 08 16 1064

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2008

| Patent document cited in search report | | Publication date | Patent family member(s) | | | Publication date |
|---|---|---|---|---|---|---|
| JP 2001281410 | A | 10-10-2001 | NONE | | | |
| US 2002034013 | A1 | 21-03-2002 | NONE | | | |
| WO 02075373 | A | 26-09-2002 | TW | 552429 | B | 11-09-2003 |
| | | | US | 2004156110 | A1 | 12-08-2004 |
| US 2004156110 | A1 | 12-08-2004 | WO | 02075373 | A1 | 26-09-2002 |
| | | | TW | 552429 | B | 11-09-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001074936 A
- JP 2000204173 A
- JP 10025388 A
- JP 10147739 A
- JP 11189621 A
- JP 11228631 A
- JP 2000313709 A
- JP 2251555 A
- JP 2308806 A
- JP 7011055 A
- JP 61094725 A
- JP 62043846 B
- JP 2001001745 A
- US 2681294 A
- JP 2002086554 A
- JP 2176625 A
- US 4583825 A
- US 5410422 A
- JP 2001100043 A


### Non-patent literature cited in the description


- **KAZUHIRO TAKAUSU.** Saishin UV Koka Gijutsu. Technical Information Institute Co., Ltd, 1991, 159
- IRGACURE. Ciba-Geigy Japan Limited, 651, 184, 907